(19) Europäisches Patentamt
European Patent Office
Office européen des brevets

(11) Veröffentlichungsnummer: **0 432 542 B1**

(12) **EUROPÄISCHE PATENTSCHRIFT**

(45) Veröffentlichungstag der Patentschrift: **14.09.94**

(51) Int. Cl.5: **C09B 62/51**, C09B 62/513, C09B 62/022, //C09B62/45

(21) Anmeldenummer: **90122363.6**

(22) Anmeldetag: **23.11.90**

Die Akte enthält technische Angaben, die nach dem Eingang der Anmeldung eingereicht wurden und die nicht in dieser Patentschrift enthalten sind.

# (54) Azofarbstoffe und Zwischenprodukte zu deren Herstellung.

(30) Priorität: **06.12.89 DE 3940266**

(43) Veröffentlichungstag der Anmeldung:
**19.06.91 Patentblatt 91/25**

(45) Bekanntmachung des Hinweises auf die Patenterteilung:
**14.09.94 Patentblatt 94/37**

(84) Benannte Vertragsstaaten:
**CH DE FR GB LI**

(56) Entgegenhaltungen:
**BE-A- 672 011**
**FR-A- 2 226 439**
**GB-A- 915 457**
**GB-A- 2 031 932**

(73) Patentinhaber: **BAYER AG**

**D-51368 Leverkusen (DE)**

(72) Erfinder: **Herd, Karl-Josef, Dr.**
**Am Gartenfeld 66**
**W-5068 Odenthal-Holz (DE)**
Erfinder: **Hoppe, Manfred, Dr.**
**Kölner Strasse 233**
**W-5067 Kürten 2 (DE)**
Erfinder: **Henk, Hermann, Dr.**
**Roggendorfstrasse 55**
**W-5000 Köln 80 (DE)**
Erfinder: **Kunde, Klaus, Dr.**
**Moltke Strasse 5**
**W-5206 Neunkirchen-Seelscheid 1 (DE)**
Erfinder: **Stöhr, Frank-Michael, Dr.**
**Am Thelen Siefen 10**
**W-5068 Odenthal (DE)**

**EP 0 432 542 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung sind Azofarbstoffe der Formel

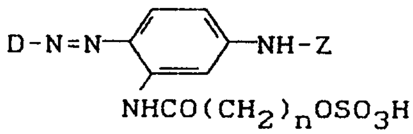

(1)

worin

- D = Rest einer Diazokomponente, vorzugsweise einer solchen der Benzol-, Naphthalin- oder Hetaryl-Reihe,
- n = 1 oder 2,
- Z = H, nicht-faserreaktiver Acylrest, faserreaktiver Rest oder ein Rest der Formel

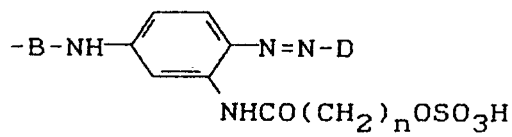

mit B = Brückenglied.

Aus DE-A-1 239 420 sind bereits säureamidgruppenhaltige Azofarbstoffe bekannt, in denen der Säureamidrest in 1,3- bzw. 1,4-Stellung zur Azogruppe steht.

Aus DE-A-2 418 987 sind bereits sulfogruppenfreie Azofarbstoffe zum Färben von Kunstfasern bekannt, die einen carboxygruppenhaltigen Säureamidrest tragen.

In GB-A-2 031 932 sind explizit Azofarbstoffe beschrieben, die eine Hydroxyacetylaminogruppe besitzen.

Geeignete Reste D sind beispielsweise solche der Formeln (2) bis (7):

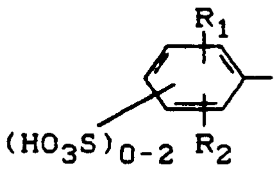

(2)

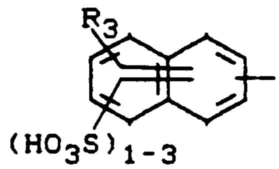

(3)

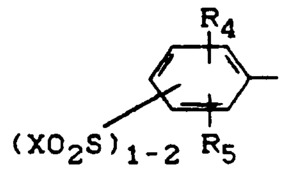

(4)

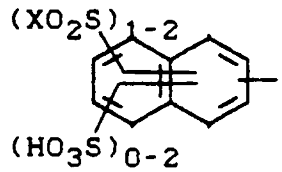

(5)

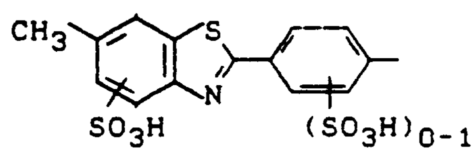

(6)

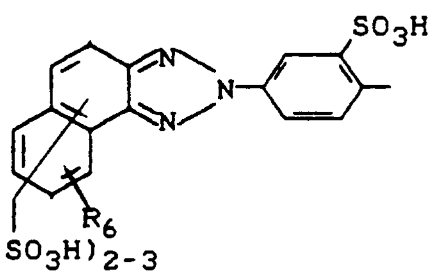

(7)

wobei

$R_1$ = H, Cl, Br, F, gegebenenfalls substituiertes $C_1$-$C_4$-Alkyl, $C_1$-$C_4$-Alkoxy, Carbalkoxy, Sulfonamid, Sulfophenylazo oder Sulfonaphthylazo; Carboxy oder -NHZ,

$R_2$ = H, Cl, Br, F, gegebenenfalls substituiertes $C_1$-$C_4$-Alkyl oder $C_1$-$C_4$-Alkoxy,

$R_3$ = H, Cl, OH, Carboxy, gegebenenfalls substituiertes $C_1$-$C_4$-Alkoxy, Sulfophenylazo oder Sulfonaphthylazo,

$R_4$ = H, gegebenenfalls substituiertes $C_1$-$C_4$-Alkyl oder $C_1$-$C_4$-Alkoxy, F, Cl, Br, COOH, $SO_3H$,

$R_5$ = H, gegebenenfalls substituiertes $C_1$-$C_4$-Alkyl oder $C_1$-$C_4$-Alkoxy, F, Cl oder Br,

$R_6$ = H oder -NHZ,

X = $-CH=CH_2$ oder $-CH_2CH_2Y$, worin

Y = alkalisch eliminierbarer Rest.

Geeignete Reste Y sind beispielsweise $OSO_3H$, $SSO_3H$, $OCOCH_3$, $OPO_3H_2$, $OSO_2C_1$-$C_4$-Alkyl, SCN, $NHSO_2C_1$-$C_4$-Alkyl, Cl, Br, F, OCOPhenyl (gegebenenfalls substituiert), $OSO_2$Phenyl (gegebenenfalls substituiert), $^{\oplus}N(C_1$-$C_4$-$Alkyl)_4Cl^{\ominus}$.

Geeignete nicht-faserreaktive Acylreste sind beispielsweise gegebenenfalls substituierte Alkylcarbonyl-, Alkylsulfonyl-, Arylcarbonyl- oder Arylsulfonylreste oder Formyl.

Geeignete faserreaktive Reste Z, d.h. solche die mit den OH-oder NH-Gruppen der Faser unter Färbebedingungen unter Ausbildung kovalenter Bindungen reagieren, sind insbesondere solche, die mindestens einen reaktiven Substituenten an einen 5- oder 6-gliedrigen aromatischheterocyclischen Ring gebunden enthalten, bspw. an einen Monoazin-, Diazin- oder Triazinring, insbesondere einen Pyridin-, Pyrimidin-, Pyridazin-, Pyrazin-, Thiazin-, Oxazin- oder asymmetrischen oder symmetrischen Triazinring, oder an ein derartiges Ringsystem, welches einen oder mehrere ankondensierte aromatisch-carbocyclische Ringe aufweist, bspw. ein Chinolin-, Phthalazin-, Cinnolin-, Chinazolin-, Chinoxalin-, Acridin-, Phenazin- und Phenanthridin-Ring-System.

Unter den reaktiven Substituenten am Heterocyclus sind beispielsweise zu erwähnen Halogen (Cl, Br oder F), Ammonium einschließlich Hydrazinium, Pyridinium, Picolinium, Carboxypyridinium, Sulfonium, Sulfonyl, Azido ($N_3$), Rhodanido, Thiolether, Oxiether, Sulfinsäure und Sulfonsäure.

Im einzelnen sind beispielsweise zu nennen:
2,4-Difluortriazinyl-6-, 2,4-Dichlortriazinyl-6-, Monohalogen-sym.-triazinylreste, insbesondere Monochlor- und Monofluortriazinylreste, die durch Alkyl, Aryl, Amino, Monoalkylamino, Dialkylamino, Aralkylamino, Arylamino, Morpholino, Piperidino, Pyrrolidino, Piperazino, Alkoxy, Aryloxy, Alkylthio, Arylthio substituiert sind, wobei Alkyl vorzugsweise gegebenenfalls substituiertes $C_1$-$C_4$-Alkyl, Aralkyl vorzugsweise gegebenenfalls substituiertes Phenyl-$C_1$-$C_4$-alkyl und Aryl vorzugsweise gegebenenfalls substituiertes Phenyl oder Naphthyl bedeutet und wobei bevorzugte Substituenten für Alkyl Halogen, Hydroxy, Cyan, Vinylsulfonyl, substituiertes Alkylsulfonyl, Dialkylamino, Morpholino, $C_1$-$C_4$-Alkoxy, Vinylsulfonyl-$C_2$-$C_4$-Alkoxy, substituierte Alkylsulfonyl-$C_2$-$C_4$-Alkoxy, Carboxy, Sulfo oder Sulfato sind und für Phenyl und Naphthyl, Sulfo, $C_1$-$C_4$-Alkyl, $C_1$-$C_4$-Alkoxy, Carboxy, Halogen, Acylamino, Vinylsulfonyl, substituiertes Alkylsulfonyl, Hydroxy, Amino.

Im einzelnen seien folgende Reste genannt:
2-Amino-4-fluor-triazinyl-6, 2-Methylamino-4-fluor-triazinyl-6, 2-Ethylamino-4-fluortriazinyl-6, 2-Isopropylamino-4-fluor-triazinyl-6, 2-Dimethylamino-4-fluortriazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxy-ethylamino)-4-fluor-triazinyl-6, 2-β-Sulfoethylamino-4-fluor-triazinyl-6, 2-β-Sulfoethyl-methylamino-4-fluor-triazinyl-6, 2-Carboxymethylamino-4-fluor-triazinyl-6, 2-Di-(carboxymethylamino)-4-fluor-triazinyl-6, 2-Sulfomethyl-methylamino-4-fluor-triazinyl-6, 2-β-Cyanethylamino-4-fluor-triazinyl-6, 2-Benzylamino-4-fluor-triazinyl-6, 2-β-Phenylethylamino-4-fluor-triazinyl-6, 2-Benzyl-methylnmino-4-fluor-triazinyl-6, 2-(4'-Sulfobenzyl)-amino-4-fluor-triazinyl-6, 2-Cyclohexylamino-4-fluor-triazinyl-6, 2-(o-, m-, p-Methylphenyl)-amino-4-fluor-triazinyl-6, 2-(o-, m-, p-Sulfophenyl)-amino-4-fluor-triazinyl-6, 2-(2',5'-Disulfophenyl)-amino-4-fluor-triazinyl-6, 2-(o-, m-, p-Chlorphenyl)-amino-4-fluor-triazinyl-6, 2-(o-, m-, p-Methoxyphenyl)-amino-4-fluor-triazinyl-6, 2-(2'-Methyl-4'-sulfophenyl)-amino-4-fluor-triazinyl-6, 2-(2'-Methyl-5'-sulfophenyl)-amino-4-fluor-triazinyl-6, 2-(2'-Chlor-4'-sulfophenyl)-amino-4-fluor-triazinyl-6, 2-(2'-Chlor-5'-sulfophenyl)-amino-4-fluor-triazinyl-6, 2-(2'-Methoxy-4'-sulfophenyl)-amino-4-fluor-triazinyl-6, 2-(o-, m-, p-Carboxyphenyl)-amino-4-fluor-triazinyl-6, 2-(2',4'-Disulfophenyl)-amino-4-fluor-triazinyl-6, 2-(3',5'-Disulfophenyl)-amino-4-fluor-triazinyl-6, 2-(2'-Carboxy-4'-sulfophenyl)-amino-4-fluor-triazinyl-6, 2-(2'-Carboxy-5'-sulfophenyl)-amino-4-fluor-triazinyl-6, 2-(6'-Sulfonaphthyl-(2'))-amino-4-fluor-triazinyl-6, 2-(4',8'-Disulfonaphthyl-(2'))-amino-4-fluor-triazinyl-6, 2-(6',8'-Disulfonaphthyl-(2'))-amino-4-fluor-triazinyl-6, 2-(N-Methyl-N-phenyl)-amino-4-fluor-triazinyl-6, 2-(N-Ethyl-N-phenyl)-amino-4-fluor-triazinyl-6, 2-(N-β-Hydroxyethyl-N-phenyl)-amino-4-fluor-triazinyl-6, 2-(N-iso-Propyl-N-phenyl)-amino-4-fluor-triazinyl-6, 2-Morpholino-4-fluor-triazinyl-6, 2-Piperidino-4-fluor-triazinyl-6, 2-(4',6',8'-Trisulfonaphthyl-(2'))-amino-4-fluor-triazinyl-6, 2-(3',6',8'-Trisulfonaphthyl-(2'))-amino-4-fluor-triazinyl-6, 2-(3',6'-Disulfonaphthyl-(1'))-amino-4-fluor-triazinyl-6, N-Methyl-N-(2,4-dichlortriazinyl-6)-carbamyl, N-Methyl-N-(2-methylamino-4-chlortriazinyl-6)-carbamyl, N-Methyl-N-(2-dimethylamino-4-chlortriazinyl-6)-carbamyl, N-Methyl-bzw. N-Ethyl-N-(2,4-dichlortriazinyl-6)-aminoacetyl-, 2-Methoxy-4-fluor-triazinyl-6, 2-Ethoxy-4-fluor-triazinyl-6, 2-Phenoxy-4-fluor-triazinyl-6, 2-(o-, m-oder p-Sulfophenoxy)-4-fluor-triazinyl-6, 2-(o-, m-oder p-Methyl- oder -Methoxy-phenoxy)-4-fluor-triazinyl-6, 2-β-Hydroxyethylmercapto-4-fluor-triazinyl-6, 2-Phenyl-mercapto-4-fluor-triazinyl-6, 2-(4'-Methylphenyl)-mercapto-4-fluortriazinyl-, 2-(2',4'-Dinitrophenyl)-mercapto-4-fluor-triazinyl-6, 2-Methyl-4-fluor-triazinyl-6, 2-Phenyl-4-fluor-triazinyl-6 sowie die entsprechenden 4-Chlor- bzw. 4-Brom-triazinyl-Reste und die entsprechenden durch Halogenaustausch mit tertiären Basen wie Trimethylamin, Triethylamin, Dimethyl-β-hydroxyethylamin, Triethanolamin, N,N-Dimethylhydrazin, Pyridin, α-, β- oder γ-Picolin, Nicotinsäure oder Isonicotinsäure, Sulfinaten insbesondere Benzolsulfinsäure oder Hydrogensulfit erhältlichen Reste.

Die Halogentriazinylreste können auch mit einem zweiten Halogentriazinylrest oder einem Halogendiazinylrest oder einem oder mehreren Vinylsulfonyl- oder Sulfatoethylsulfonylresten verknüpft sein bspw. über ein Brückenglied

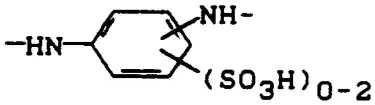 , 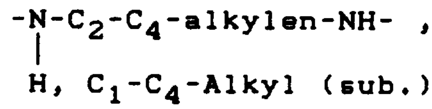 ,

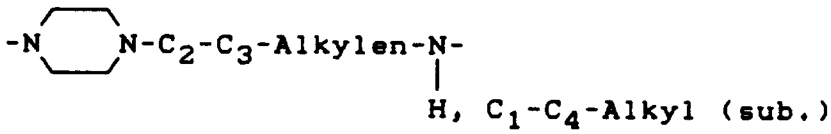

oder im Falle der Sulfatoethylsulfonyl- bzw. Vinylsulfonylgruppe über ein Brückenglied

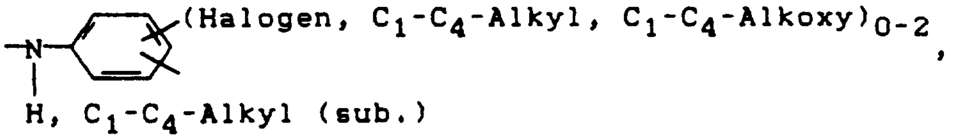

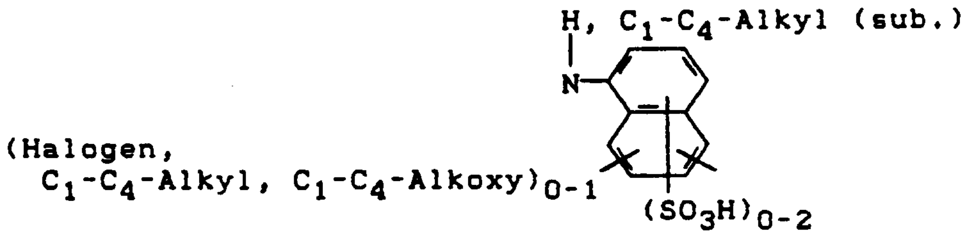

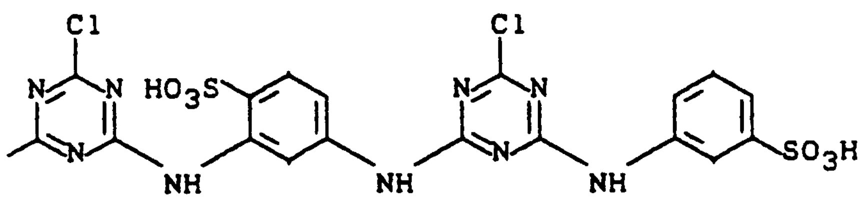

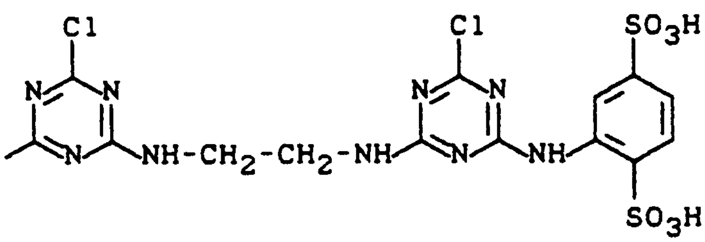

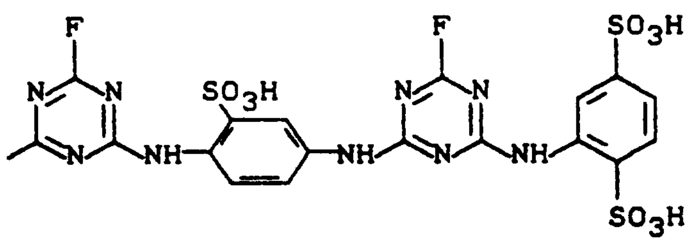

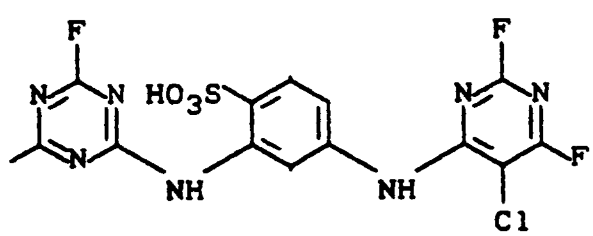

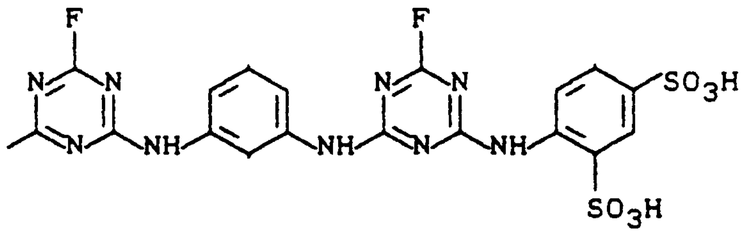

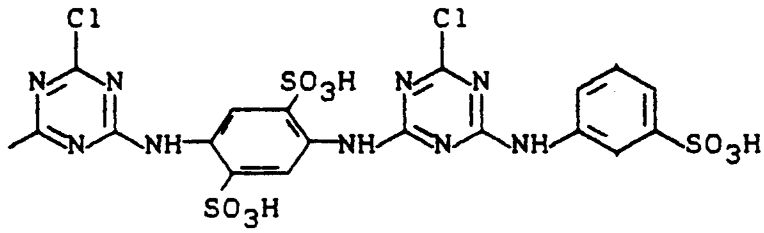

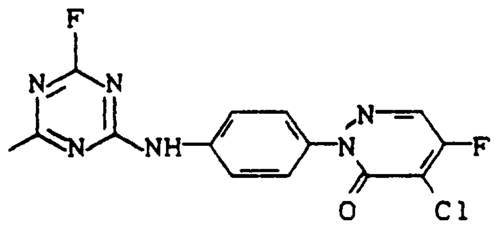

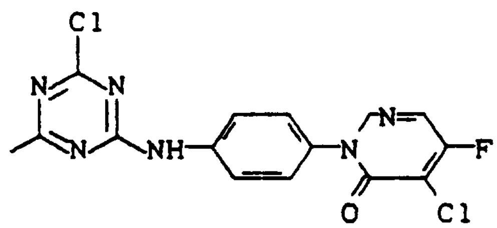

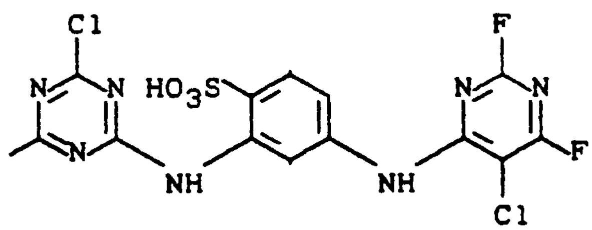

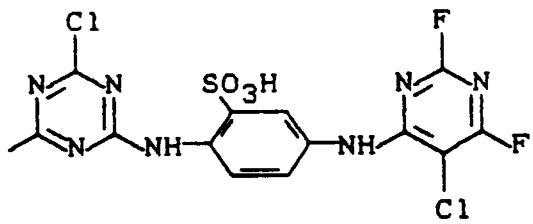

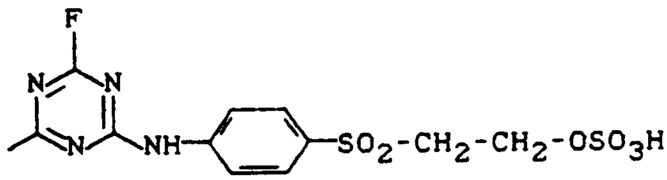

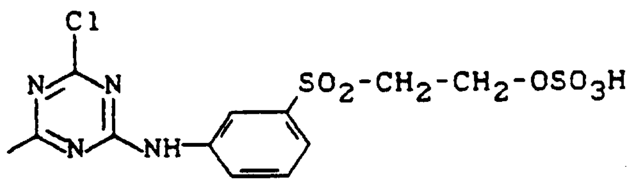

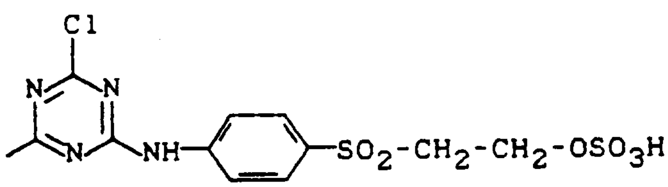

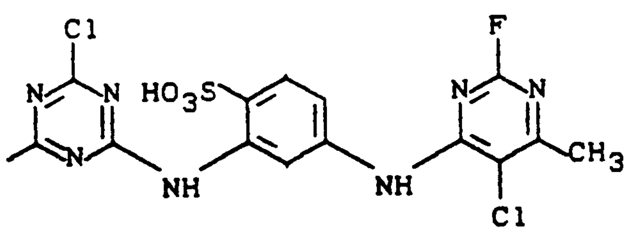

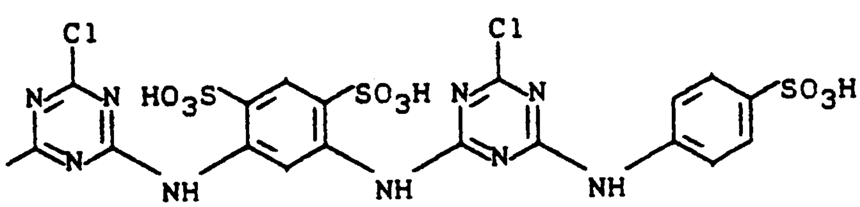

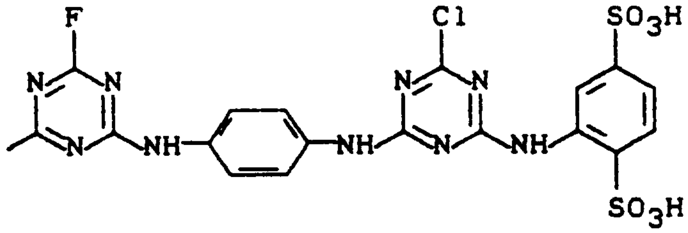

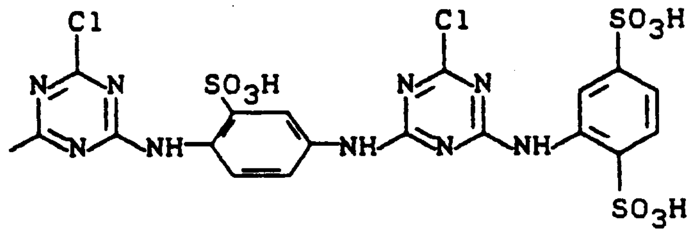

Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder -trichlormethyl- oder -5-carbalkoxy-pyrimidinyl-6-, 2,6-Dichlorpyrimidin-4-carbonyl-, 2,4-Dichlorpyrimidin-5-carbonyl-, 2-Chlor-4-methyl-pyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlor-chinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-5- oder -6-carbonyl-, 2,3-Dichlorchinoxalin-5- oder -6-sulfonyl-, 1,4-Dichlorphthalazin-6-sulfonyl-oder -6-carbonyl-, 2,4-Dichlorchinazolin-7- oder -6-sulfonyl- oder -carbonyl-, 2- oder 3- oder 4-(4',5'-Dichlorpyridizon-6'-yl-1')-phenylsulfonyl- oder -carbonyl-, β-(4',5'-Dichlorpyridazon-6'-yl-1')-ethylcarbonyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2-Fluor-5-methyl-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-,2-Fluor-5-methyl-4-pyrimidinyl-, 2,5,6-Trifluor-4-pyrimidinyl-, 5-Chlor-6-chlormethyl-2-fluor-4-pyrimidinyl-, 5-Chlor-6-dichlormethyl-2-fluor-4-pyrimidinyl-, 5-Chlor-6-trichlormethyl-2-fluor-4-pyrimidinyl-, 5-Chlor-2-chlormethyl-6-fluor-4-pyrimidinyl-, 5-Chlor-2-dichlormethyl-6-fluor-4-pyrimidinyl-, 5-Chlor-2-trichlormethyl-6-fluor-4-pyrimidinyl-, 5-Chlor-2-fluor-dichlormethyl-6-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl-oder -5-methylsulfonyl-4-pyrimidinyl-, 2-Fluor-5-carbonamido-4-pyrimidinyl-, 2-Fluor-5-carbmethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbmethoxy-4-pyrimidinyl-, 2-Fluor-6-phenyl-4-pyrimidinyl-, 2-Fluor-6-cyan-4-pyrimidinyl-, 5-Chlor-6-Fluor-2-Methyl-4-pyrimidinyl-, 5,6-Difluor-2-Trifluormethyl-4-pyrimidinyl-, 5-Chlor-6-Fluor-2-Dichlor-fluormethyl-4-pyrimidinyl-, 2-Fluor-5-chlorpyrimidin-4-yl, 2-Methyl-4-fluor-5-methylsulfonylpyrimidinyl-6, 2,6-Difluor-5-methyl-sulfonyl-4-pyrimidinyl-, 2,6-Dichlor-5-methylsulfonyl-4-pyrimidinyl, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlor-triazinyl-6-, 2,4-Bis-(3'-carboxyphenylsulfonyl)-triazinyl-6; sulfonylgruppenhaltige Pyrimidinringe, wie 2-Carboxymethylsulfonyl-pyrimidinyl-4-, 2-Methylsulfonyl-6-methyl-pyrimidinyl-4-, 2-Methylsulfonyl-6-ethyl-pyrimidinyl-4-, 2-Phenylsulfonyl-5-chlor-6-methyl-pyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidin-5-sulfonyl-, 2-Methylsulfonyl-pyrimidinyl-4-, 2-Phenylsulfonyl-pyrimidinyl-4-, 2-Trichlormethylsulfonyl-6-methyl-pyrimidinyl-4-, 2-Methylsulfonyl-5-chlor-6-methyl-pyrimidinyl-4-, 2-Methylsulfonyl-5-brom-6-methyl-pyrimidinyl-4-, 2-Methylsulfonyl-5-chlor-6-ethyl-pyrimidinyl-4-, 2-Methylsulfonyl-5-chlor-6-chlormethyl-pyrimidinyl-4-, 2-Methylsulfonyl-4-chlor-6-methylpyrimidin-5-sulfonyl-, 2-Methylsulfonyl-5-nitro-6-methylpyrimidinyl-4-, 2,5,6-Tris-methylsulfonyl-pyrimidinyl-4-, 2-Methylsulfonyl-5,6-dimethyl-pyrimidinyl-4-, 2-Ethylsulfonyl-5-chlor-6-methyl-pyrimidinyl-4-, 2-Methylsulfonyl-6-chlor-pyrimidinyl-4-, 2,6-Bis-methylsulfonyl-5-chlor-pyrimidinyl-4-, 2-Methylsulfonyl-6-carboxypyrimidinyl-4-, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-$\beta$-Sulfoethylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor-6-methyl-pyrimidinyl-4-, 2-Methylsulfonyl-6-chlorpyrimidin-4- und -5-carbonyl-, 2,6-Bis-(methylsulfonyl)-pyrimidin-4-oder -5-carbonyl-, 2-Ethylsulfonyl-6-chlorpyrimidin-5-carbonyl-, 2,4-Bis-(methylsulfonyl)-pyrimidin-5-sulfonyl-, 2-Methylsulfonyl-4-chlor-6-methylpyrimidin-5-sulfonyl- oder -carbonyl-; 2-Chlorbenzthiazol-5- oder -6-carbonyl- oder -5- oder -6-sulfonyl-, 2-Arylsulfonyl- oder Alkylsulfonylbenzthiazol-5- oder -6-carbonyl oder -5- oder -6-sulfonyl-, wie 2-Methylsulfonyl- oder 2-Ethylsulfonylbenzthiazol-5- oder -6- sulfonyl- oder -carbonyl-, 2-Phenylsulfonylbenzthiazol-5- oder -6-sulfonyl- oder -carbonyl- und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl-oder -sulfonyl-, 2-Chlor-4-methylthiazol-(1,3)-5-carbonyl- oder -4- oder -5-sulfonyl-, N-Oxid des 4-Chlor-oder 4-Nitrochinolin-5-carbonyl.

Desweiteren sind Reaktivgruppen der aliphatischen Reihe zu nennen, wie Acryloyl-, Mono-, Di- oder Trichloracryloyl-, wie -CO-CH=CH-Cl, -CO-CCl=$CH_2$, -CO-CCl=CH-$CH_3$, ferner -CO-CCl=CH-COOH, -CO-CH=CCl-COOH, $\beta$-Chlorpropionyl-, 3-Phenylsulfonylpropionyl-, 3-Methylsulfonylpropionyl-, 2-Fluor-2-chlor-3,3-difluorcyclobutan-1-carbonyl-, 2,2,3,3-Tetrafluorcyclobutan-carbonyl-1- oder -sulfonyl-1-, $\beta$-(2,2,3,3-Tetrafluorcyclobutyl-1)-acryloyl-,$\alpha$- oder $\beta$-Bromacryloyl-, $\alpha$- oder $\beta$-Alkyl- oder -Arylsulfonylacryloyl-Gruppe, wie $\alpha$- oder $\beta$-Methylsulfonylacryloyl, Chloracetyl, Vinylsulfonyl, $-SO_2CH_2CH_2Z$ worin Z = alkalisch abspaltbare Gruppe, insbesondere $-OSO_3H$, $-OCOCH_3$, Cl, Br, F, $-SSO_3H$, $-OPO_3H_2$, $-OCOC_6H_5$, Di-$C_1$-$C_4$-Alkylamino, quartäres Ammonium, insbesondere $-N^{\oplus}(C_1\text{-}C_4\text{-Alkyl})_3X^{\ominus}$, $-OSO_2CH_3$, -SCN, $-NH-SO_2CH_3$, $-OSO_2-C_6H_4-CH_3$, $-OSO_2-C_6H_5$, -OCN,

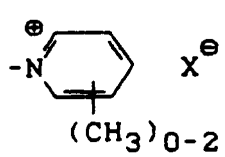
oder
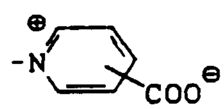

mit

$X^{\ominus}$ = Anion, bspw. $-OSO_3H$, $-SSO_3H$, $-OPO_3H_2$, -Cl, -Br, -F, -SCN, -OCN, $-OSO_2CH_3$, $-OSO_2C_6H_5$, $OCOCH_3$, -J, $-OSO_2OCH_3$, $-OSO_2C_6H_4CH_3$, $-OCOC_6H_5$.

Bevorzugt sind Reaktivfarbstoffe der Formel (1), bei denen Z die Bedeutung eines Pyrimidinyl-, Methylpyrimidinyl- oder eines Triazinyl-Restes zukommt.

Geeignete Reste B sind beispielsweise -CO-, $-SO_2-$, -COCO-, -CO-aliphatischer Rest-CO-, -CO-aromatischer Rest-CO-,

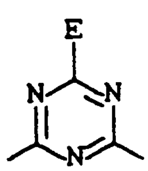
oder
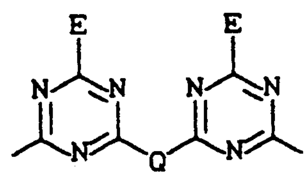
,

wobei

aliphatischer Rest vorzugsweise für gegebenenfalls substituiertes $C_1$-$C_6$-Alkylen oder -CH=CH- steht, aromatischer Rest vorzugsweise für gegebenenfalls substituiertes Phenylen, E für Halogen (Cl, Br, F), gegebenenfalls substituiertes $C_1$-$C_6$-Alkoxy, gegebenenfalls substituiertes Phenoxy, $NR_7R_8$ (mit $R_7$, $R_8$ = H, gegebenenfalls substituiertes $C_1$-$C_6$-Alkyl, Cycloalkyl, gegebenenfalls substituiertes Phenyl, Naphthyl oder Hetaryl) oder $-NR_7R_8$ =

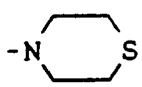 , 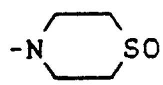 , 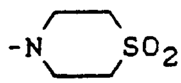 , 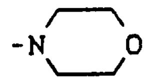 , 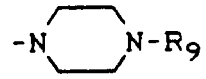 ,

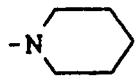 , 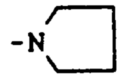

steht, wobei
die heterocyclischen Ringe gegebenenfalls weitersubstituiert sind, beispielsweise durch 1 - 2 $C_1$-$C_4$-Alkyl oder $C_1$-$C_4$-Alkoxy, und $R_9$ = H, gegebenenfalls substituiertes $C_1$-$C_6$-Alkyl (Substituenten insbesondere OH, $SO_3H$, $OSO_3H$, COOH) und
Q =

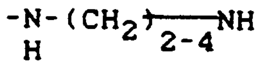 , 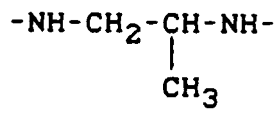 , 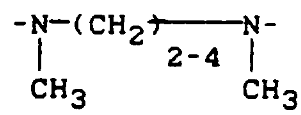 ,

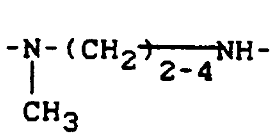 , 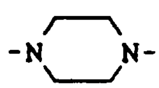 , 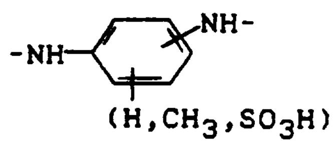 ,

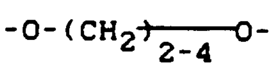 oder 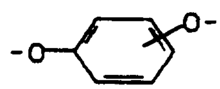 .

Als Substituenten für Alkylreste kommen beispielsweise in Frage: Cl, OH, $SO_3H$, $OSO_3H$, COOH, $SO_2CH_2CH_2OSO_3H$, $C_1$-$C_4$-Alkoxy, Phenyl (Substituenten beispielsweise $SO_3H$, COOH, $SO_2CH_2CH_2OSO_3H$; CN, Acylamino, insbesondere $C_1$-$C_4$-Alkylcarbonylamino).

Als Substituenten für die Phenyl- und Naphthylreste seien genannt: $SO_3H$, COOH, $C_1$-$C_4$-Alkyl, $C_1$-$C_4$-Alkoxy, OH, Cl, $SO_2CH_2CH_2OSO_3H$, Acylamino.

Als Diazokomponenten, die 1 bis 2 Gruppen -$SO_2X$ enthalten, seien genannt:
Anilin-4-β-sulfatoethylsulfon, Anilin-4-β-thiosulfatoethylsulfon, Anilin-4-vinylsulfon, Anilin-4-β-chlorethylsulfon, Anilin-3-β-sulfatoethylsulfon, Anilin-3-vinylsulfon, 2-Methoxy-anilin-5-β-sulfatoethylsulfon, 2-Methoxy-anilin-5-β-thiosulfatoethylsulfon, 2-Methoxy-anilin-5-vinylsulfon, 4-Methoxy-anilin-3-β-sulfatoethylsulfon, 4-Methoxy-anilin-3-β-vinylsulfon, 2,5-Dimethoxy-anilin-4-β-sulfatoethylsulfon, 2,5-Dimethoxy-anilin-4-vinylsulfon, 2,5-Dimethoxy-anilin-4-β-sulfatoethylsulfon, 2-Methoxy-5-methyl-anilin-4-β-sulfatoethylsulfon, Anilin-2-β-sulfatoethylsulfon, 2-Chloranilin-5-β-sulfatoethylsulfon, 4-Chloranilin-3-β-sulfatoethylsulfon, 3-(3- oder 4-Aminobenzoyl)-aminophenyl-β-sulfatoethylsulfon, 2-Methoxy-5-methyl-anilin-4-vinylsulfon, 6-Carboxy-anilin-3-β-sulfatoethylsulfon, 6-Carboxy-anilin-3-vinylsulfon, 2-Sulfoanilin-4-β-sulfatoethylsulfon, 2-Sulfoanilin-4-vinylsulfon, 2,4-Disulfoanilin-5-vinylsulfon, 2-Hydroxyanilin-5-β-sulfatoethylsulfon, 2 Hydroxy-anilin-4-β-sulfatoethylsulfon, 3-Sulfo-2-hydroxy-anilin-5-β-sulfatothylsulfon, 2-Naphthylamin-8-β-sulfatoethylsulfon, 2-Naphthylimin-6-β-sulfatoethylsulfon, 1-Sulfo-2-naphthylamino-6-β-sulfatoethylsulfon, 1-Naphthylamin-4-β-sulfatoethylsulfon, 1-Sulfo-2-napthylamin-5-β-sulfatoethylsulfon, 6-Sulfo-2-naphthylamin-8-β-sulfatoethylsulfon, 2-Amino-3-sulfonaphthalin-6,8-bis-(β-sulfatoethylsulfon),2-Brom-1-aminobenzol-4-β-sulfatoethylsulfon, 2,6-Dichlor-1-aminobenzol-4-β-sulfatoethylsulfon, 1-Naphthylamin-5-β-sulfatoethylsulfon, 2-Naphthylamin-5-β-sulfatoethylsulfon, 2-Naphthylamin-8-β-sulfatoethylsulfon, 8-Sulfo-2-napthylamino-6-β-sulfatoethylsulfon.

Bevorzugte Farbstoffe (1) sind solche mit

Z = faserreaktiver Rest der Pyrimidinyl- oder Triazinylreihe, insbesondere solche der Formel

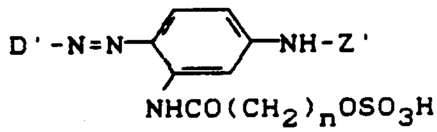

(1a)

worin n = 1 oder 2

D' =

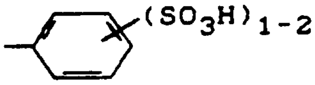

(8)

,

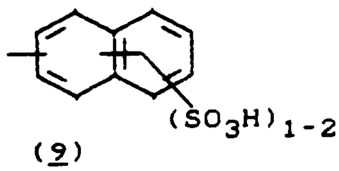

(9)

,

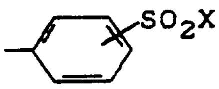

(10)

,

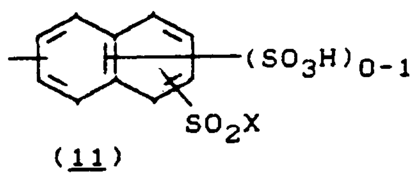

(11)

und

Z' =

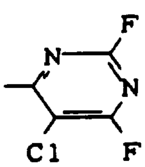

,

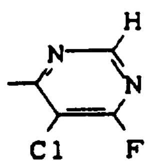

,

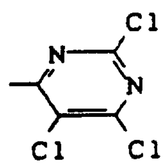

,

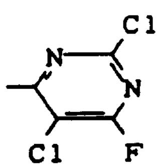

,

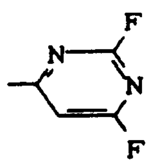

,

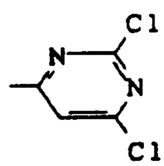

,

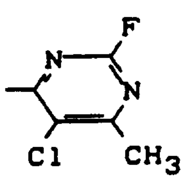

,

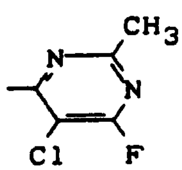

,

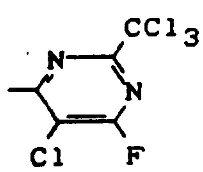

,

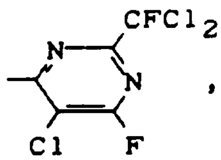 , 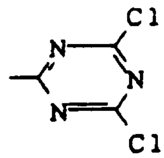 , 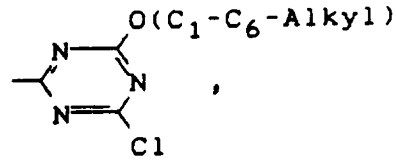 ,

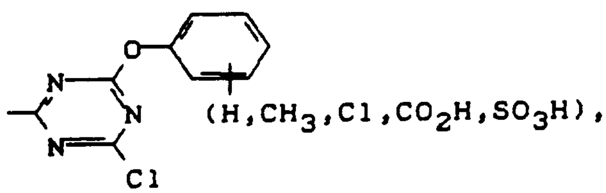 , 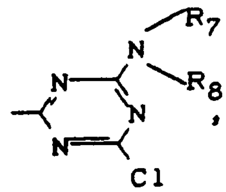 ,

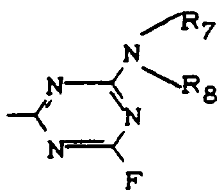 oder 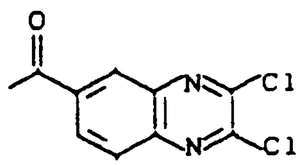 .

Bevorzugte Farbstoffe der Formel (1a) sind solche der Formeln (12) bis (15)

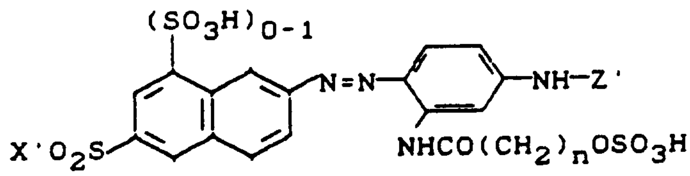

(12)

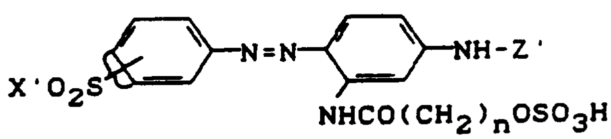

(13)

worin

X' = $CH=CH_2$ oder $CH_2CH_2OSO_3H$,

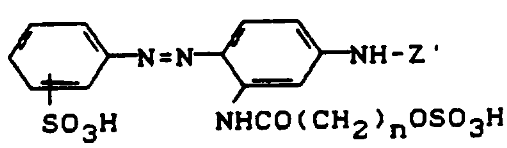

(14)

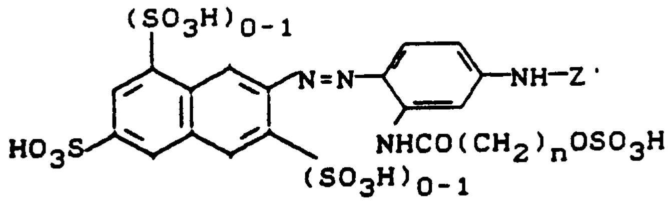 (15)

Die neuen Farbstoffe der Formel (1) lassen sich nach den in der Reaktivfarbstoffchemie üblichen Herstellungsverfahren erhalten. Danach werden Diazokomponenten D-$NH_2$ diazotiert und auf die Kupplungskomponente der Formel

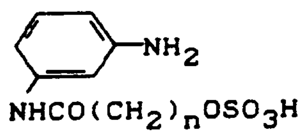 (16)

gekuppelt. Es resultieren Aminoazoverbindungen der Formel

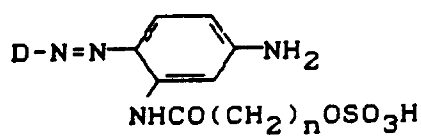 (17).

(16) stellt aufgrund des wasserlöslichmachenden Sulfatorestes eine interessante Kupplungskomponente für Azofarbstoffe dar. Die Herstellung erfolgt durch Veresterung der bekannten Hydroxyverbindungen

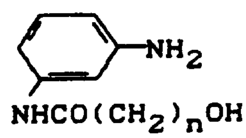 (18)

mit Schwefelsäure, Oleum oder Schwefeltrioxid in an sich bekannter Weise.

Die Farbstoffe (17) lassen sich durch Acylierung mit Acylierungsmitteln zu Farbstoffen (1) acylieren.

Geeignete Acylierungsmittel sind beispielsweise reaktive Derivate von entsprechenden aliphatischen oder aromatischen Carbonsäuren oder Sulfonsäuren, $COCl_2$, $SO_2Cl_2$,ClCOCOCl oder die entsprechenden Dihalogentriazin-Verbindungen oder die den faserreaktiven Resten Z zugrundeliegenden reaktiven heterocyclischen Verbindungen mit mindestens zwei reaktiven Gruppierungen, vorzugsweise Cl oder F.

Die Farbstoffe (1) lassen sich auch durch Sulfatierung von Farbstoffen der Formel

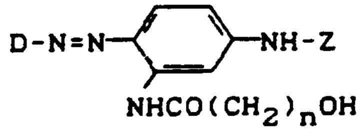 (19)

mit Oleum, Schwefelsäure oder $SO_3$ in an sich bekannter Weise herstellen.

Die neuen Farbstoffe eignen sich zum Färben und Bedrucken von hydroxyl- und amidgruppenhaltigen Materialien, insbesondere Cellulosematerialien. Reaktivfarbstoffe zeichnen sich durch eine hohe Reaktivität und einen hohen Fixiergrad aus. Die mit diesen Farbstoffen erhältlichen Färbungen oder Drucke auf Cellulosematerialien zeichnen sich außerdem durch eine hohe Faser-Farbstoff-Bindungsstabilität sowie

durch eine hervorragende Stabilität gegenüber Oxidationsmitteln, wie peroxyd-oder chlorhaltige Waschmittel, aus. Die Auswaschbarkeit der beim Färben oder Druck nur in geringem Maße entstehenden Hydrolyseprodukte ist ausgezeichnet. Die Farbstoffe besitzen eine sehr gute Wasserlöslichkeit sowie ein ausgezeichnetes Kombinationsverhalten.

Die angegebenen Formeln sind die der freien Säuren. Bei der Herstellung werden im allgemeinen die Salze erhalten, insbesondere die Alkalisalze, wie Natrium-, Kalium- oder Lithiumsalze.

Die Farbstoffe können sowohl als Feststofformierungen wie auch als konzentrierte Lösungen eingesetzt werden.

Beispiel 1:

23,6 g 7-Amino-1,3-naphthalindisulfonsäure-mono-Natriumsalz werden in 150 ml Wasser/50 g Eis und 20 ml konz. Salzsäure angerührt und bei 5-10 °C tropfenweise mit 17 ml einer wäßrigen Natriumnitritlösung (300 g $NaNO_2$/l) versetzt. Die Diazotierung ist nach 1,5 Stunden beendet. Der geringe Überschuß an Nitrit wird durch Amidosulfonsäurezugabe zerstört.

17,8 g N-(3-Aminophenyl)sulfatoessigsäureamid werden in 100 ml Wasser angerührt und durch Zugabe von festem Natriumhydrogencarbonat aufpH 6,5-7,5 gestellt. Zu dieser Lösung fügt man 50 g Eis und dosiert dann obige Diazoniumsalzmischung über einen Zeitraum von 30 Minuten zu. Dabei hält man den pH-Wert durch Zugabe von festem Natriumhydrogencarbonat konstant bei 6,0-6,2. Die Temperatur sollte 10 °C nicht übersteigen. Die Kupplungslösung wird 30 Minuten nachgerührt und dann bei 10-15 °C und pH 6,2 mit 14 g 5-Chlor-2,4,6-trifluorpyrimidin versetzt. Während der Kondensationsreaktion hält man den pH-Wert durch Zugabe von 20 %iger Sodalösung konstant bei 6,2-6,5. Die Reaktion ist nach ca. 1 Stunde beendet. Nach Zusatz von 5 g Aktivkohle wird die Farbstofflösung klarfiltriert und anschließend mit 60 g Kochsalz ausgesalzen. Der ausgefallene Farbstoff wird abgesaugt und getrocknet. Er besitzt die Struktur

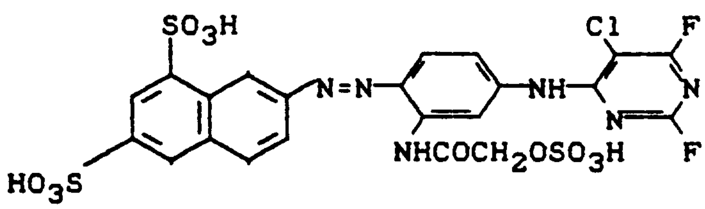

($\lambda_{max}$ = 394 nm ($H_2O$)) und färbt Baumwolle in brillanten goldgelben Farbtönen.

Variation der Diazokomponente und der Reaktivkomponente sowie Einsatz von N-(3-Aminophenyl)-2-sulfatopropionsäureamid anstelle des analogen Essigsäureamid-Derivats aus Beispiel 1 führen nach obiger Herstellungsvorschrift zu weiteren wertvollen goldgelben Reaktivfarbstoffen:

Tabelle 1: 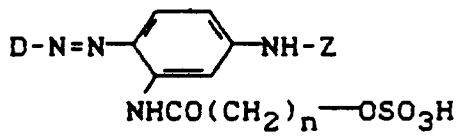

| Bsp. | n | D | Z | $\lambda_{max}$ |
|---|---|---|---|---|
| 2 | 2 | 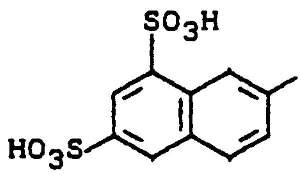 | 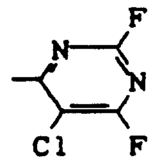 | 396 nm |
| 3 | 1 | " | 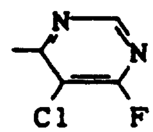 | 402 nm |
| 4 | 1 | " | 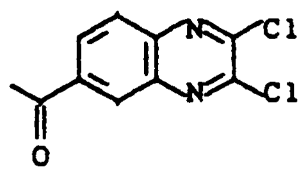 | |

Fortsetzung Tab.1:

| Bsp. | n | D | Z | $\lambda_{max}$ |
|---|---|---|---|---|
| 5 | 1 | 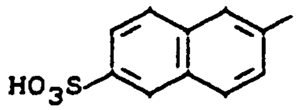 | 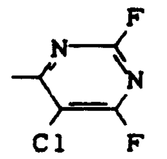 | |
| 6 | 2 | " | " | |
| 7 | 1 | 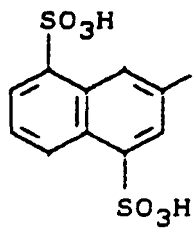 | " | 393 nm |
| 8 | 1 | " | 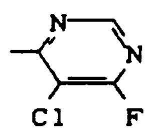 | 399 nm |
| 8 | 1 | 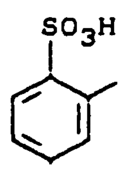 | 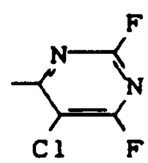 | 362 nm |
| 10 | 1 | 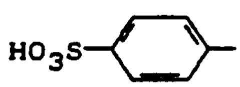 | 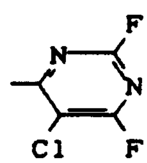 | |
| 11 | 1 | 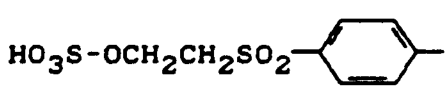 | " | 382,<br>460 (sh) nm |

Fortsetzung Tab.1:

| Bsp. | n | D | Z |
|---|---|---|---|
| 12 | 2 | 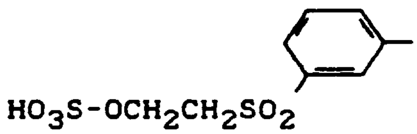 | 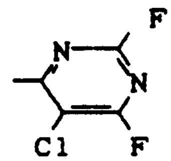 |
| 13 | 1 | 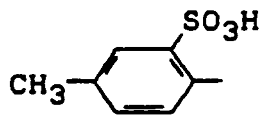 | 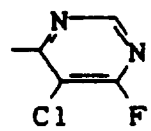 |
| 14 | 1 | 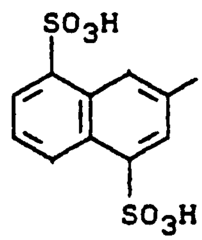 | 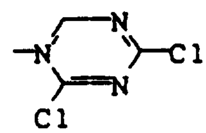 |
| 15 | 1 | 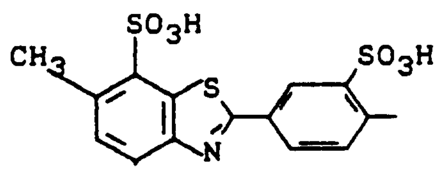 | 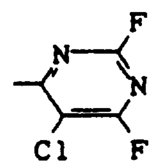 |
| 16 | 1 | 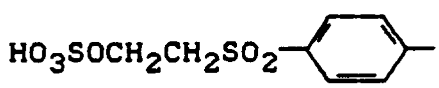 | 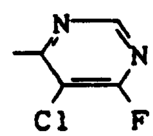 |
| 17 | 2 | " | " |
| 18 | 1 | " | 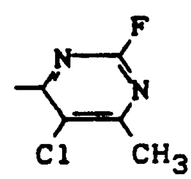 |

Fortsetzung Tab.1:

| Bsp. | n | D | Z |
|---|---|---|---|
| 19 | 1 | 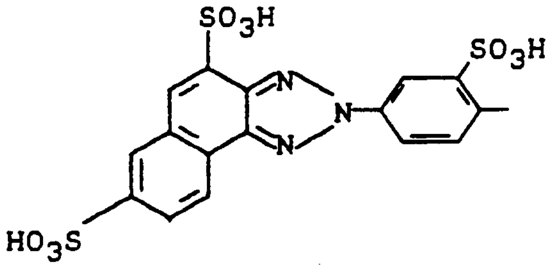 | 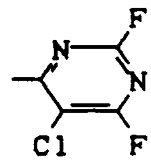 |

Beispiel 20

23,6 g 7-Amino-1,3-naphthalindisulfonsäure-mono-Natriumsalz werden analog zu Beispiel 1 diazotiert und auf 17,8 g N-(3-Aminophenyl)-sulfatoessigsäureamid gekuppelt. Die orangerote Kupplungslösung wird durch Eiszugabe auf 0 °C abgekühlt und bei pH 6,2-6,5 mit 11 g 2,4,6-Trifluortriazin versetzt. Während der Kondensationsreaktion hält man den pH-Wert mit Sodalösung konstant bei 6,5. Die Reaktion ist nach 10-15 Minuten beendet. Man fügt eine Lösung von 13,4 g Morpholinhydrogensulfat in 50 ml Wasser zu, hält den pH-Wert durch Zugabe von Sodalösung konstant bei 7,5-8,0 und erwärmt langsam auf Raumtemperatur. Die zweite Kondensationsreaktion wird 1 Stunde nachgerührt und der Farbstoff durch Zugabe von 40 g Kochsalz und 40 g Kaliumchlorid ausgesalzen. Nach Isolierung und Trocknung erhält man ein hellrotes Farbstoffpulver der Formel

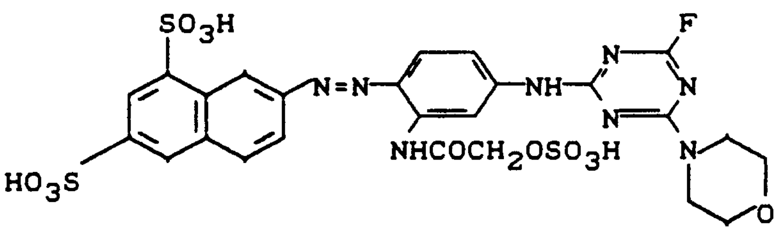

($\lambda_{max}$ = 400, 460(sh)nm), das Baumwolle in brillanten hochechten goldgelben Farbtönen färbt.

Variation der Diazokomponente oder Einsatz von diversen Aminen anstelle des Morpholins führen zu weiteren interessanten gelben bis golbgelben Reaktivfarbstoffen:

Tabelle 2:

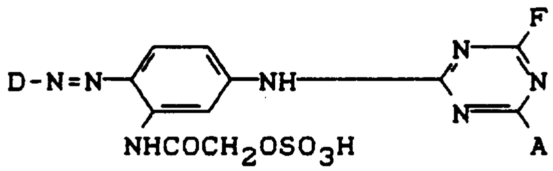

| Bsp. | D | A | $\lambda_{max}$ |
|---|---|---|---|
| 21 | 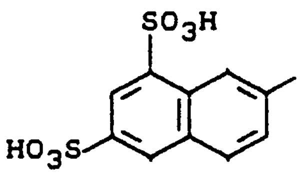 | 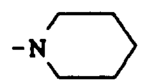 | 402, 460 (sh) nm |
| 22 | " | 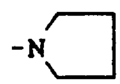 | 402, 460 (sh) nm |
| 23 | 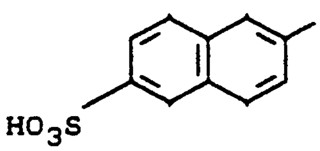 | 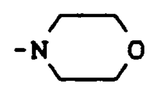 | |

Fortsetzung Tabelle 2

| Bsp. | D | A |
|---|---|---|
| 24 | 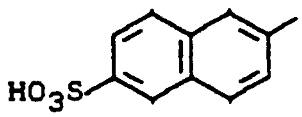 | 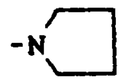 |
| 25 | " | 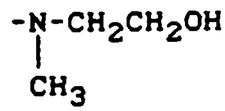 |
| 26 | 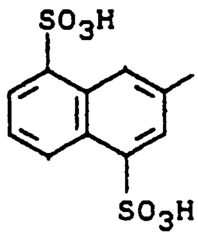 | 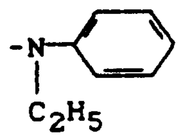 |
| 27 | " | 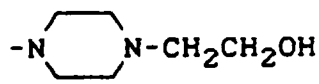 |
| 28 | 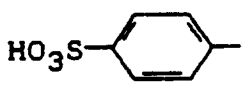 | 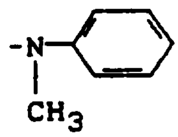 |
| 29 | 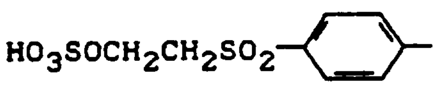 | 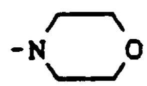 |
| 30 | " | $-NH-CH_2CH_2OH$ |
| 31 | " | 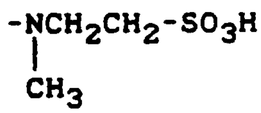 |

Weiterhin erhalt man wertvolle Farbstoffe, wenn für die Beispiele in Tabelle 2 bzw. Beispiel 20 anstelle von Trifluortriazin nun Trichlortriazin (Cyanurchlorid) einsetzt und mit diversen Aminen bzw. Hydroxyverbindungen analog zu Beispiel 20 kondensiert:

Tabelle 3:

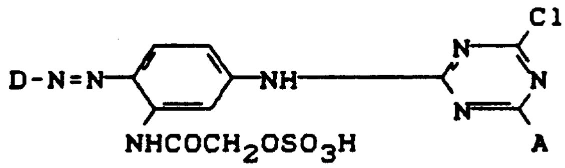

| Bsp. | D | A |
|---|---|---|
| 32 | 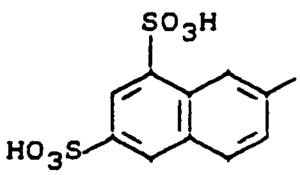 | 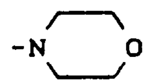 |
| 33 | " | 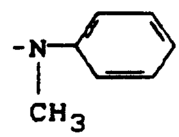 |
| 34 | " | 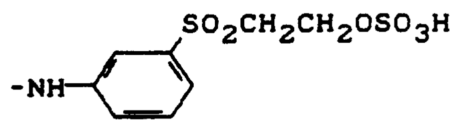 |
| 35 | " | 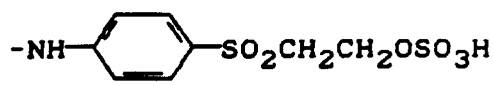 |
| 36 | " | $-O-CH(CH_3)_2$ |
| 37 | " | 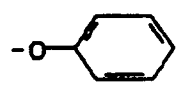 |

Fortsetzung Tabelle 3

| Bsp. | D | A |
|---|---|---|
| 38 | 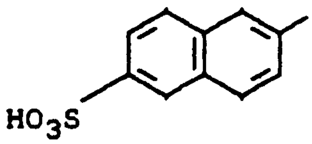 | $N(CH_2CH_2OH)_2$ |
| 39 | " | 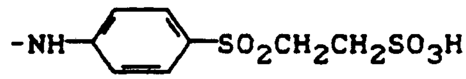 |
| 40 | 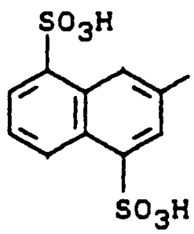 | 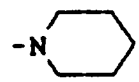 |
| 41 | 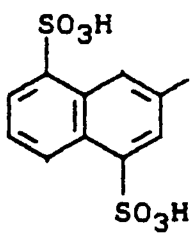 | 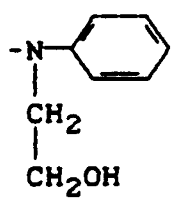 |
| 42 | " | 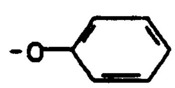 |
| 43 | " | 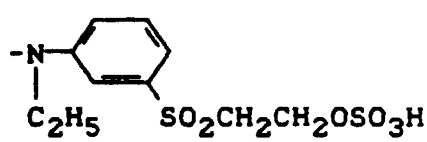 |
| 44 | 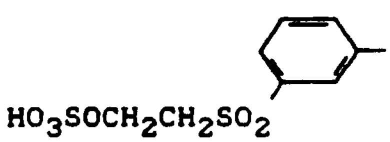 | 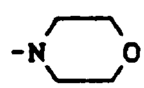 |

Fortsetzung Tabelle 3

| Bsp. | D | A |
|---|---|---|
| 45 | 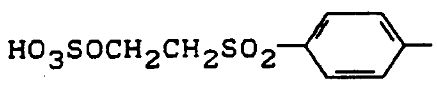 | 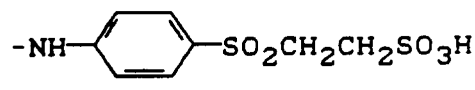 |
| 46 | " | 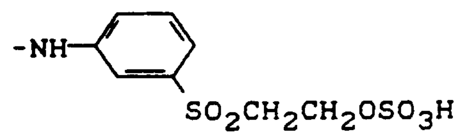 |

Beispiel 47

32,5 g 7-Amino-3-(2-sulfatoethylsulfonyl)-1-naphthalinsulfonsäure-mono-Kaliumsalz werden in 150 ml Wasser/20 g Eis und 20 ml verdünnte Schwefelsäure (48 %ig) angerührt und bei 10-15 °C mit 18 ml einer wäßrigen Natriumnitritlösung (300 g $NaNO_2$/l) innerhalb von 15 Minuten diazotiert. Zur Vervollständigung der Reaktion rührt man eine weitere Stunde bei 15 °C. Der geringe Überschuß an Nitrit wird durch Zugabe von Amidosulfonsäure entfernt.

17,8 g N-(3-Aminophenyl)sulfatoessigsäureamid werden in 100 ml Wasser suspendiert und durch Zugabe von festen Natriumhydrogencarbonat bei pH 7,0 gelöst. Zu dieser Lösung fügt man 50 g Eis und dosiert dann obige Diazoniumsalzsuspension innerhalb von 30 Minuten zu. Dabei hält man den pH-Wert mit festen Natriumhydrogencarbonat konstant bei 6,0-6,2. Durch gelegentliche Eiszugabe hält man die Temperatur zwischen 5-10 °C. Nach weiteren 30 Minuten bei pH 6,2 und 10 °C resultiert eine orangerote Lösung der Azoverbindung der Formel

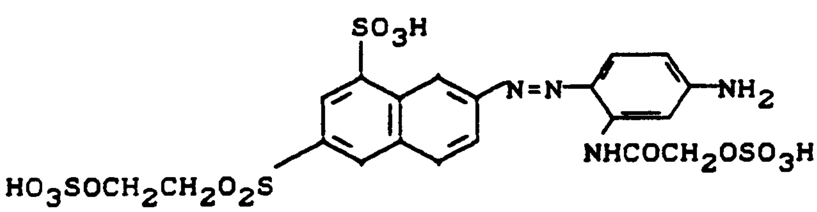

(460 nm)

Diese Verbindung ist auch zugänglich, indem man diazotierte 7-Amino-3-(2-sulfatoethylsulfonyl)-1-naphthalinsulfonsäure (s.oben) auf eine äquimolare Menge an N-(3-Aminophenyl)hydroxyessigsäureamid kuppelt und das Zwischenprodukt der Formel

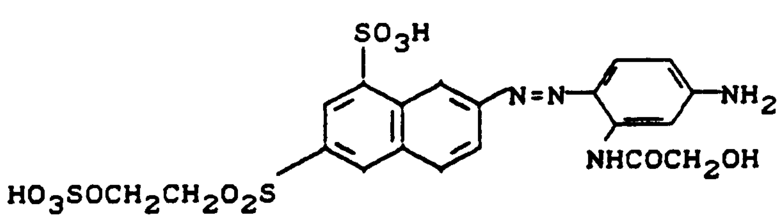

sulfatiert. Dazu trägt man z.B. 40 g trockenes Zwischenprodukt bei 20-25 °C in 60 ml 98 %ige Schwefelsäure ein, rührt 2 Stunden bei 25 °C und trägt die Reaktionslösung auf 300 g Eis/100 ml Wasser aus.

Das ausgefallene Produkt wird durch Filtration isoliert und anschließend in 250 ml Wasser bei pH 7-8 gelöst.

Die orangerote Kupplungslösung wird auf 17-18 °C erwärmt und bei pH 6,5 mit 14 g 5-Chlor-2,4,6-trifluorpyrimidin kondensiert. Dabei hält man den pH-Wert durch Zugabe von 20 %iger Sodalösung konstant bei 6,5-7,0. Die Reaktion ist nach ca. 1 Stunde beendet. Es werden 5 g Aktivkohle zugefügt und es wird über eine Nutsche geklärt. Die orangegelbe Lösung wird mit 50 g Kochsalz ausgesalzen. Die Ausfällung wird nach einstündiger Nachrührzeit durch Abnutschen isoliert und getrocknet. Das orangerote Farbstoffpulver besitzt die Struktur

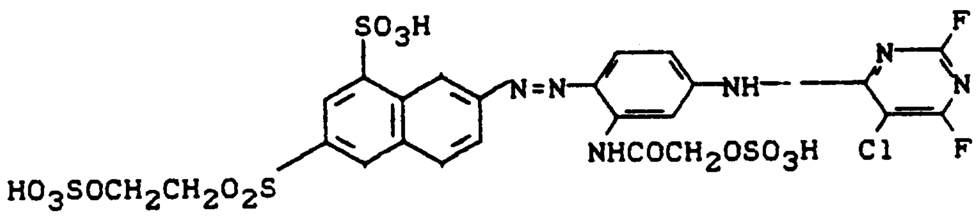

($\lambda_{max}$ = 404, 470(sh)nm) und färbt Baumwolle hochfixierend in goldgelben Farbtönen.

Beispiel 48

18,2 g 2-Amino-6-(2-hydroxyethylsulfonyl)naphthalin werden in Analogie zur Diazotierung in Beispiel 47 diazotiert und auf 12,0 g N-(3-Aminophenyl)hydroxyessigsäureamid gekuppelt. Dabei fällt das Kupplungsprodukt der Struktur

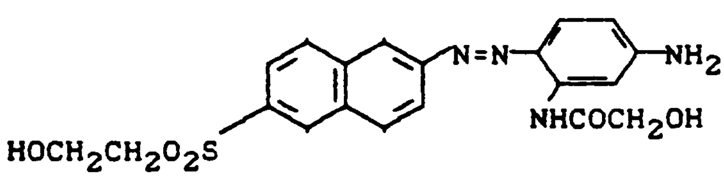

als orangeroter Feststoff aus. Nach Isolieren und Trocknen resultieren 29,5 g eines Pulvers, das nun in 60 ml Schwefelsäure-monohydrat eingetragen wird. Dabei sollte die Temperatur 30 °C nicht übersteigen. Es wird 4 Stunden bei 20-25 °C gerührt und die Reaktionslösung anschließend auf 250 g Eis/50 ml Wasser ausgetragen. Der ausgefallene Farbstoff der Struktur

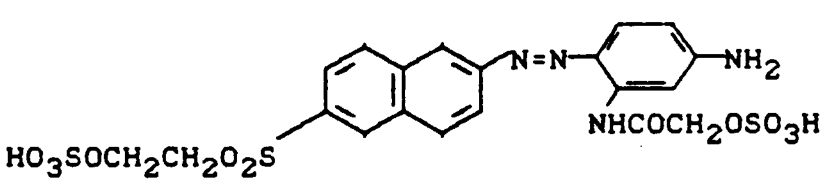

wird durch Abnutschen isoliert. Die feuchte Paste wird in 250 ml Wasser suspendiert und durch Zugabe von Sodalösung bei pH 6,5-7,0 gelöst. Es wird mit Eis auf 0 °C abgekühlt und mit 11 g 2,4,6-Trifluortriazin versetzt, während der Kondensationreaktion hält man den pH-Wert mit Sodalösung konstant bei 6,5. Die Reaktion ist nach 10-15 Minuten beendet. Man fügt eine Lösung von 11,8 g 2-Methylaminoethansulfonsäure-Natriumsalz in 50 ml Wasser zu, hält den pH-Wert mittels Sodalösung konstant bei 8,0 und erwärmt langsam auf Raumtemperatur. Die zweite Kondensatlonsreaktion ist nach ca. 1 Stunde beendet. Der Farbstoff wird mit 30 g Kaliumchlorid ausgesalzen und isoliert. Nach dem Trocknen erhält man 45 g eines salzhaltigen hellroten Farbstoffpulvers der Formel

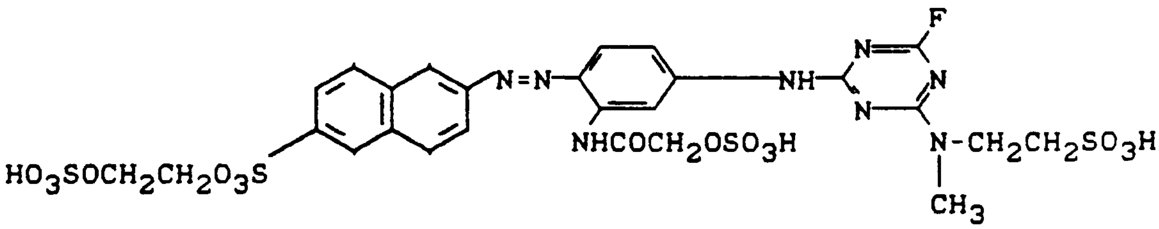

Durch Variation der Reaktivkomponente bzw. des Aminrestes sind analog zu Beispiel 47 und 48 weitere wertvolle goldgelbe bifunktionelle Reaktivfarbstoffe zugänglich:

Tabelle 4

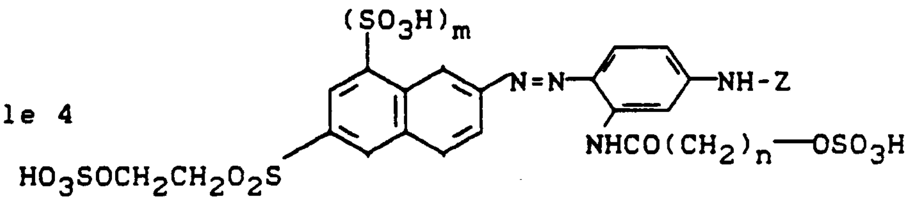

| Beispiel | m | n | Z | |
|---|---|---|---|---|
| 49 | 1 | 1 | 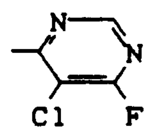 | 411,460(sh)nm |
| 50 | 1 | 2 | " | " " |
| 51 | 1 | 1 | 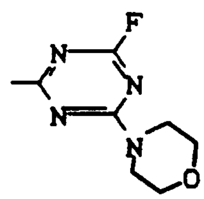 | 410,460(sh)nm |
| 52 | 1 | 1 | 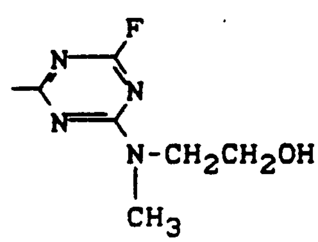 | " " |

| Beispiel | m | n | Z |
|---|---|---|---|
| 53 | 1 | 2 | 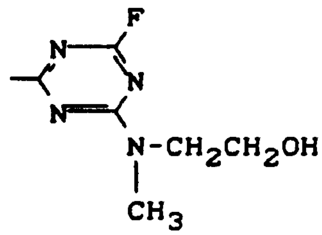 |
| 54 | 1 | 1 | 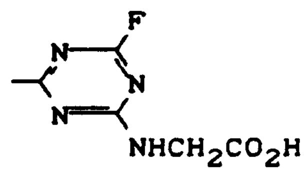 |
| 55 | 1 | 1 | 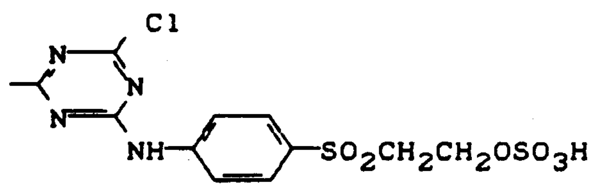 |
| 56 | 0 | 1 | " |
| 57 | 1 | 1 | 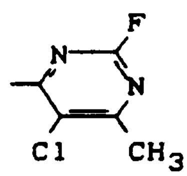 |
| 58 | 1 | 1 | 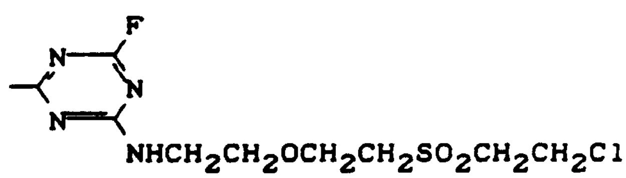 |
| 59 | 1 | 1 | 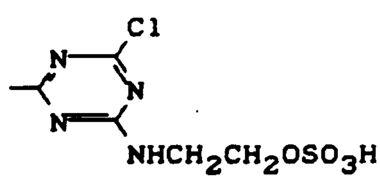 |
| 60 | 0 | 1 | " |

| Beispiel | m | n | Z |
|---|---|---|---|
| 61 | 0 | 2 | 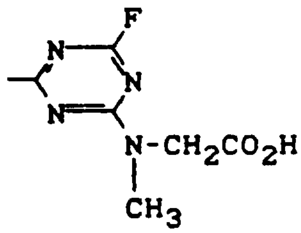 |
| 62 | 0 | 1 | 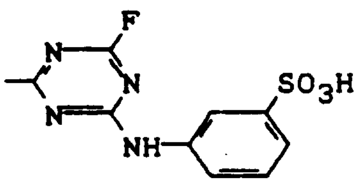 |
| 63 | 0 | 1 | 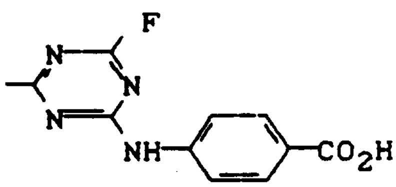 |

Neue interessante goldgelbe Reaktivfarbstoffe erhält man auch durch Kondensation der faserreaktiven Farbbasen, wie z.B. die aus Beispiel 47 oder 48, mit Phosgen, Cyanurchlorid oder anderen nichtfaserreaktiven Acylierungsmitteln.

Beispiel 64

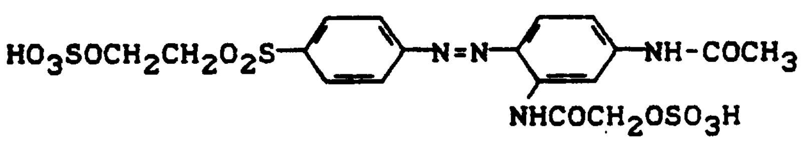

Beispiel 65

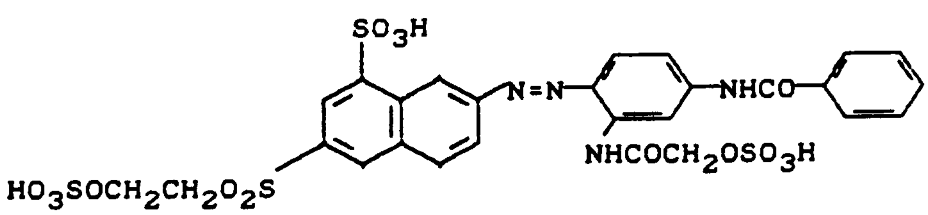

Beispiel 66

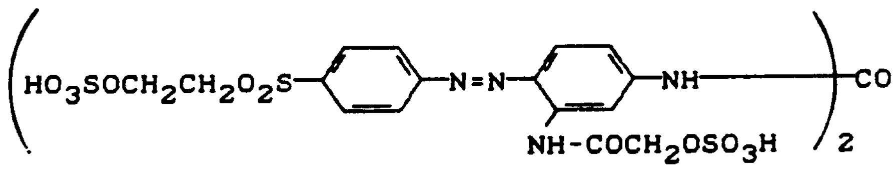

Beispiel 67

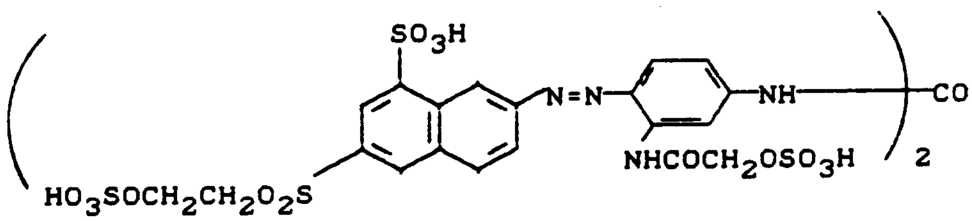

Beispiel 68

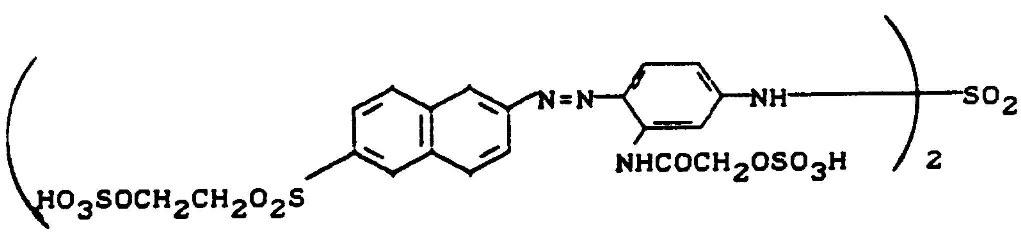

Beispiel 69

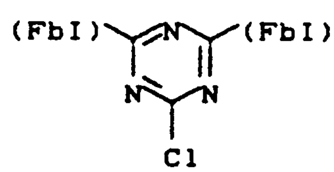

worin (FbI) = 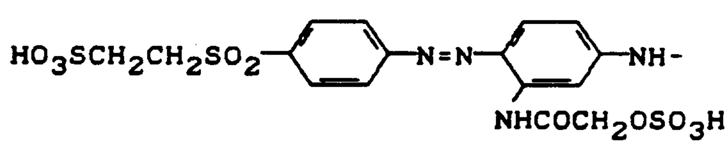

Beispiel 70

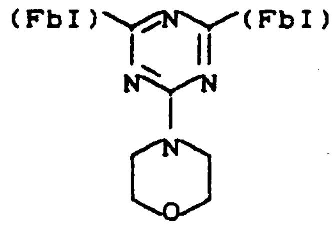

Beispiel 71

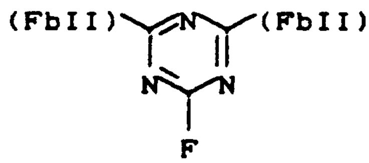

worin (FbII) =

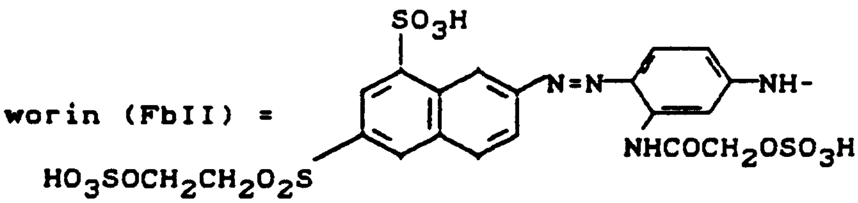

Beispiel 72

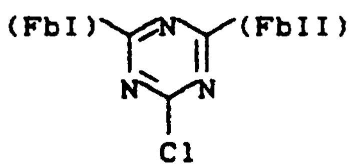

Beispiel 73

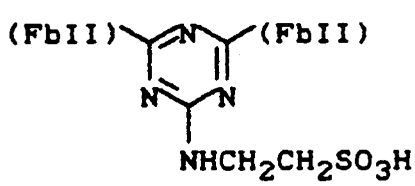

Beim Einsatz von nichtfaserreaktiven Farbbasen sind durch Kondensation mit Phosgen, Cyanurchlorid, Terephthaloylchlorid u.a. neue interessante Direktfarbstoffe für das Färben von Baumwolle erhältlich, wie z.B.

Beispiel 74

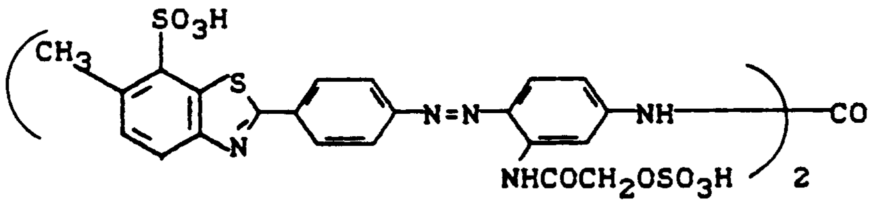 goldgelb

**Beispiel 75**

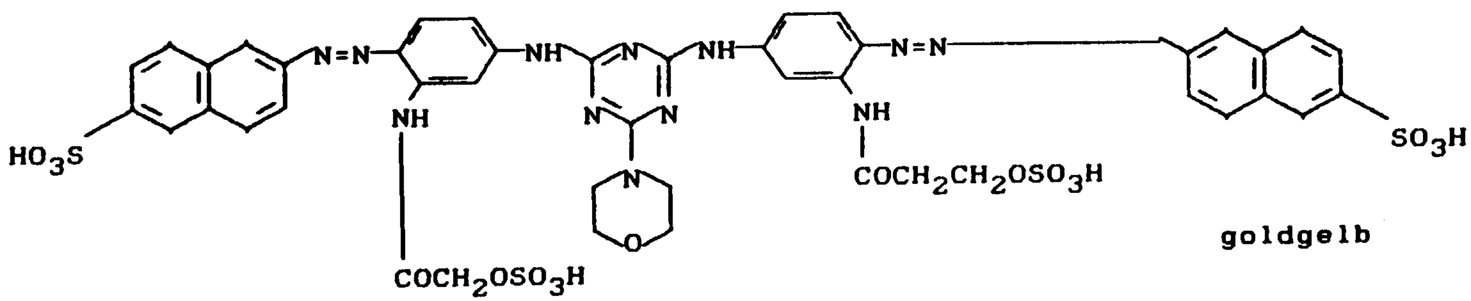

goldgelb

**Beispiel 76**

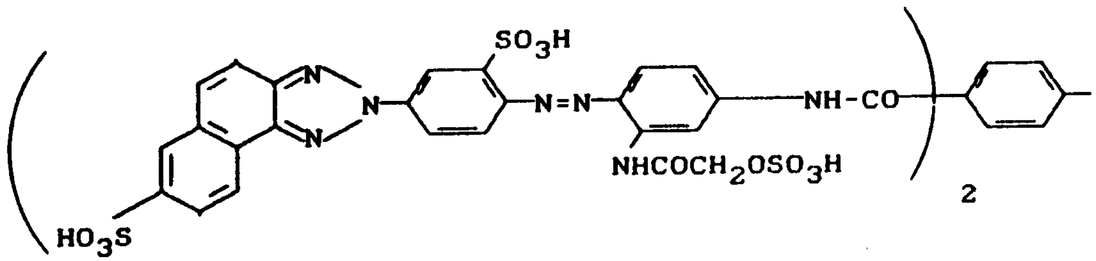

goldgelb

**Beispiel 77**

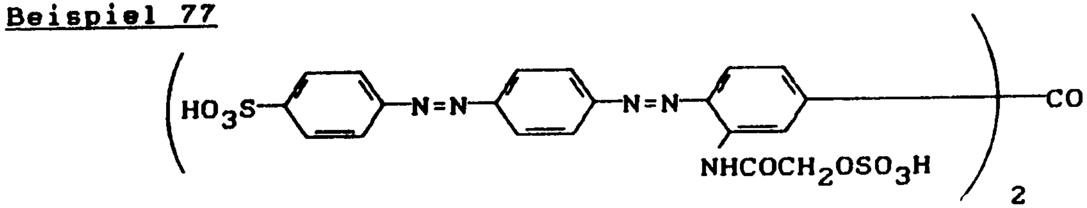

scharlach

## Patentansprüche

**1.** Azofarbstoffe der Formel

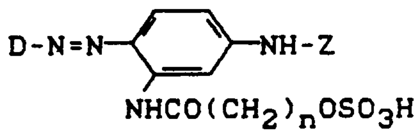

(1)

worin

D = Rest einer Diazokomponente, vorzugsweise einer solchen der Benzol-, Naphthalin- oder Hetaryl-Reihe,

n = 1 oder 2,

Z = H, nicht-faserreaktiver Acylrest, faserreaktiver Rest oder ein Rest der Formel

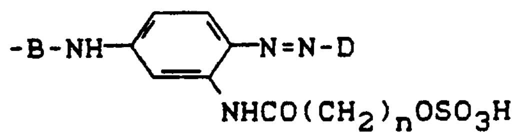

mit B = Brückenglied.

**2.** Farbstoffe des Anspruchs 1 mit

D =

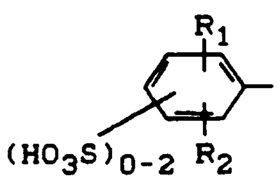

(2)

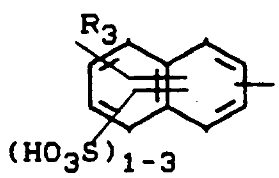

(3)

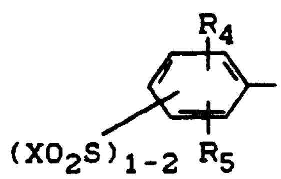

(4)

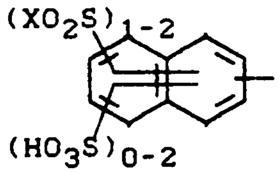

(5)

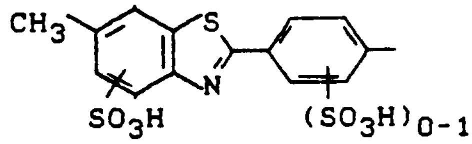

(6)

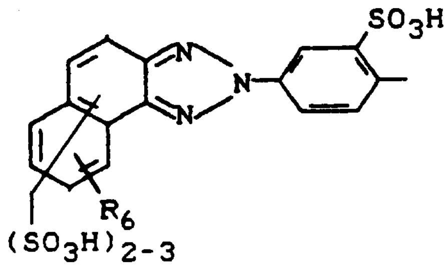

(7)

wobei

$R_1$ = H, Cl, Br, F, gegebenenfalls substituiertes $C_1$-$C_4$-Alkyl, $C_1$-$C_4$-Alkoxy, Carbalkoxy, Sulfonamid, Sulfophenylazo oder Sulfonaphthylazo; Carboxy oder -NHZ,
$R_2$ = H, Cl, Br, F, gegebenenfalls substituiertes $C_1$-$C_4$-Alkyl oder $C_1$-$C_4$-Alkoxy,
$R_3$ = H, Cl, OH, Carboxy, gegebenenfalls substituiertes $C_1$-$C_4$-Alkoxy, Sulfophenylazo oder Sulfonaphthylazo,
$R_4$ = H, gegebenenfalls substituiertes $C_1$-$C_4$-Alkyl oder $C_1$-$C_4$-Alkoxy, F, Cl, Br, COOH, $SO_3H$,
$R_5$ = H, gegebenenfalls substituiertes $C_1$-$C_4$-Alkyl oder $C_1$-$C_4$-Alkoxy, F, Cl oder Br,
$R_6$ = H oder -NHZ,
X = $-CH=CH_2$ oder $-CH_2CH_2Y$, worin
Y = alkalisch eliminierbarer Rest.

**3.** Farbstoffe der Ansprüche 1 und 2 mit
Z = faserreaktiver Rest der Pyrimidinyl- oder Triazinylreihe.

**4.** Farbstoffe des Anspruchs 1 der Formel

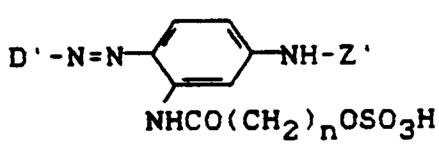

(1a)

worin n = 1 oder 2
D' =

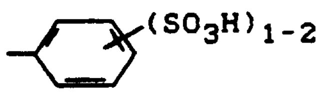

(8)

,

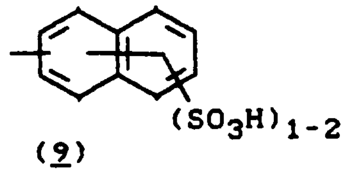

(9)

,

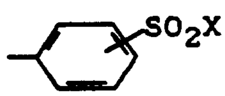

(10)

,

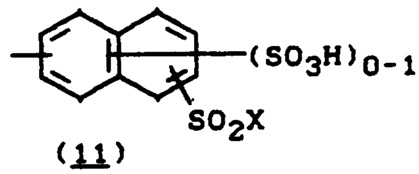

(11)

und

Z' =

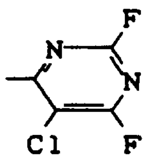 , 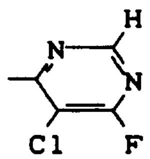 , 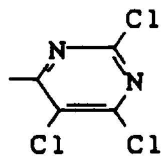 ,

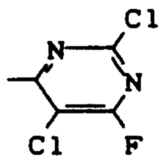 , 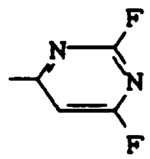 , 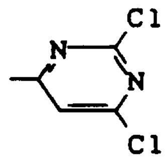 ,

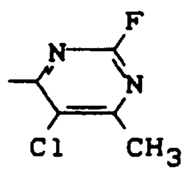 , 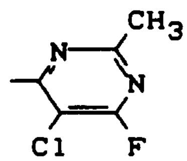 , 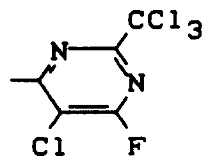 ,

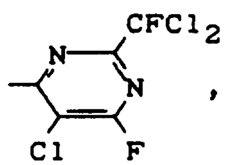 , 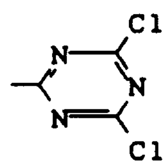 , 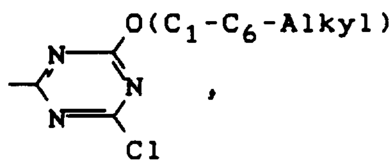 ,

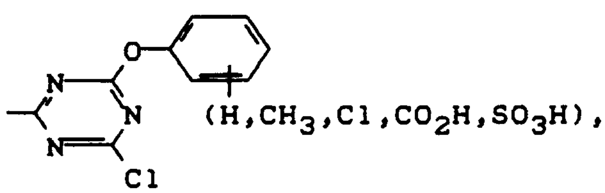 , 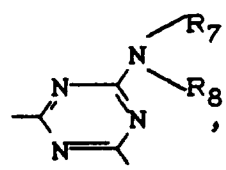 ,

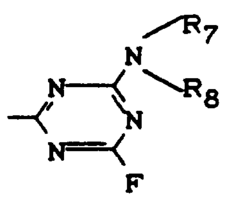 oder 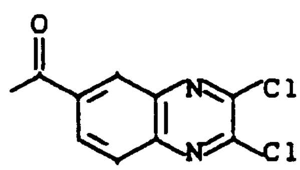

wobei

$R_7$, $R_8$ = H, gegebenenfalls substituiertes $C_1$-$C_6$-Alkyl, Cycloalkyl, gegebenenfalls substituiertes Phenyl, Naphthyl und Hetaryl oder

$NR_7R_8$ =

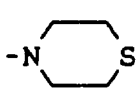 , 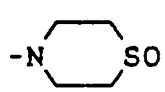 , 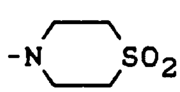 , 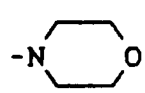 , 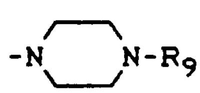 ,

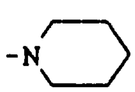 oder 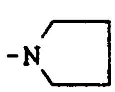

mit $R_9$ = H, gegebenenfalls substituiertes $C_1$-$C_6$-Alkyl und wobei die genannten heterocyclischen Ringe, gegebenenfalls Substituenten aufweisen können.

**5.** Farbstoffe des Anspruchs 4 der Formeln

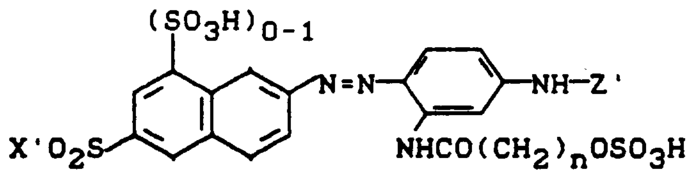

(12)

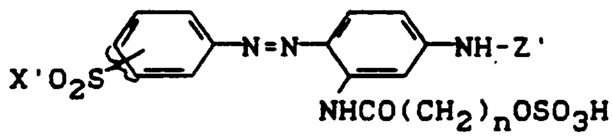

(13)

worin X' = $CH=CH_2$ oder $CH_2CH_2OSO_3H$,

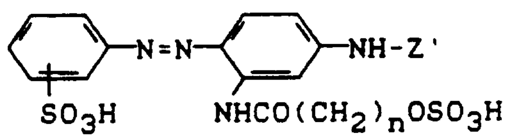

(14)

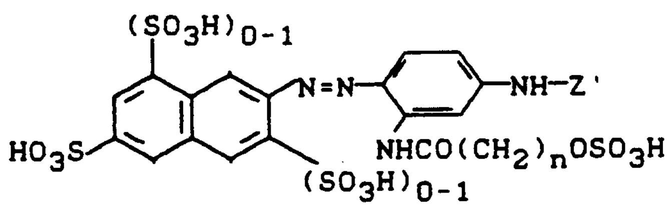

(15)

**6.** Verwendung der Farbstoffe der Ansprüche 1 bis 5 zum Färben und Bedrucken von Hydroxylgruppen- und Amidgruppen-haltigen Materialien.

## Claims

**1.** Azo dyestuffs of the formula

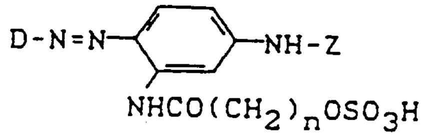

(1)

wherein

D = a radical of a diazo component, preferably one of the benzene, naphthalene or hetaryl series,

n = 1 or 2 and

Z = H, an acyl radical which is not fibre-reactive, a fibre-reactive radical or a radical of the formula

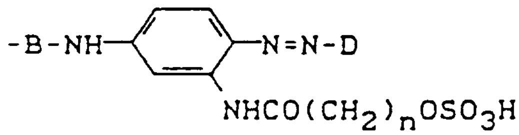

where B = a bridge member.

2. Dyestuffs of Claim 1, where
D =

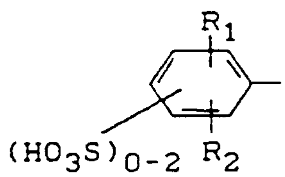

(2)

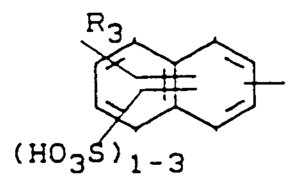

(3)

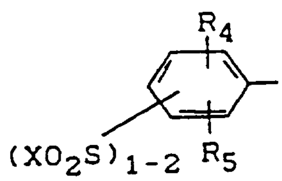

(4)

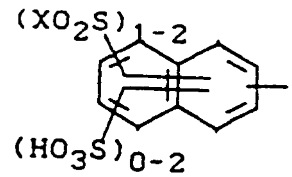

(5)

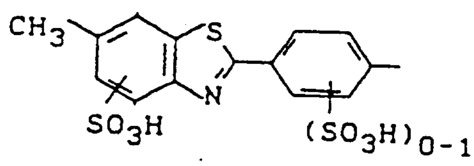

(6)

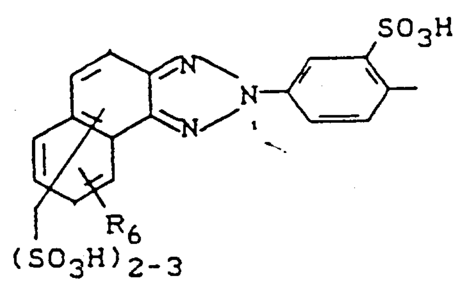

(7)

wherein

$R_1$ = H, Cl, Br, F or optionally substituted $C_1$-$C_4$-alkyl, $C_1$-$C_4$-alkoxy, carbalkoxy, sulphonamide, sulphophenylazo or sulphonaphthylazo; or carboxyl or -NHZ,
$R_2$ = H, Cl, Br, F or optionally substituted $C_1$-$C_4$-alkyl or $C_1$-$C_4$-alkoxy,
$R_3$ = H, Cl, OH, carboxyl or optionally substituted $C_1$-$C_4$-alkoxy, sulphophenylazo or sulphonaphthylazo,
$R_4$ = H, optionally substituted $C_1$-$C_4$-alkyl or $C_1$-$C_4$-alkoxy, F, Cl, Br, COOH or $SO_3H$,
$R_5$ = H, optionally substituted $C_1$-$C_4$-alkyl or $C_1$-$C_4$-alkoxy, F, Cl or Br,
$R_6$ = H or -NHZ and
X = $-CH=CH_2$ or $-CH_2CH_2Y$, wherein
Y = a radical which can be eliminated under alkaline conditions.

**3.** Dyestuffs of Claims 1 and 2, where

Z = a fibre-reactive radical of the pyrimidinyl or triazinyl series.

**4.** Dyestuffs of Claim 1 of the formula

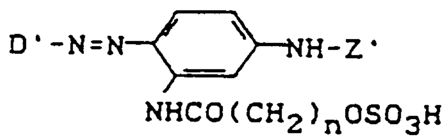

(1a)

wherein n = 1 or 2

D' =

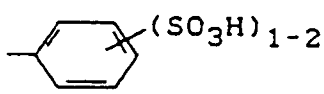

(8)

,

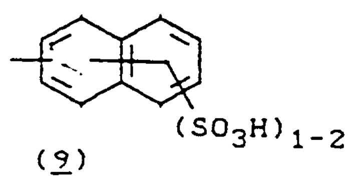

(9)

,

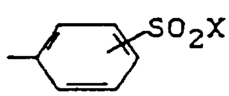

(10)

,

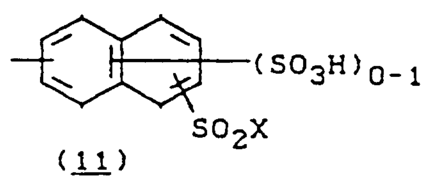

(11)

and

Z' =

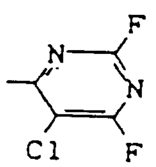

,

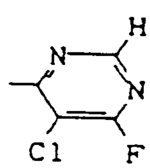

,

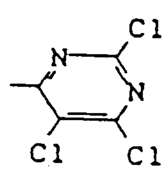

,

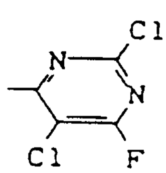

,

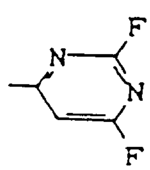

,

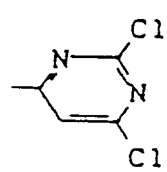

,

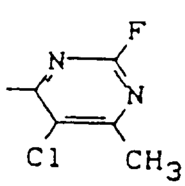

,

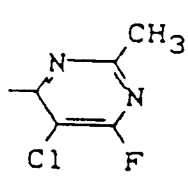

,

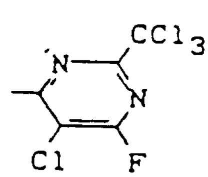

,

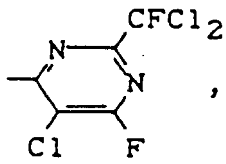 , 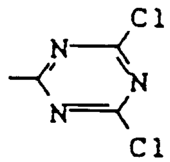 , 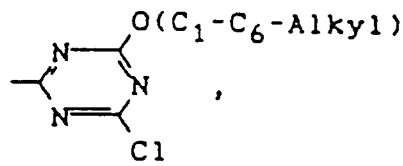 ,

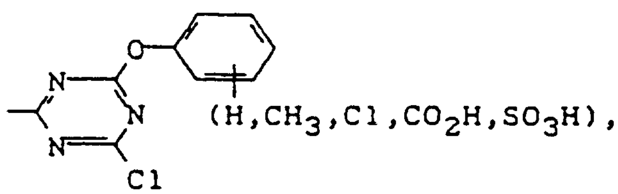 , 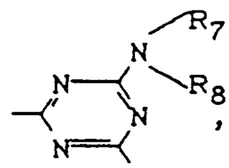 ,

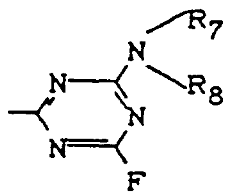 or 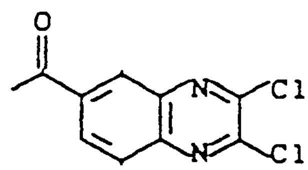

wherein

$R_7$ and $R_8$ = H, optionally substituted $C_1$-$C_6$-alkyl, cycloalkyl, optionally substituted phenyl, naphthyl or hetaryl, or

$NR_7R_8$ =

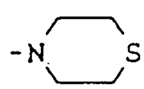 , 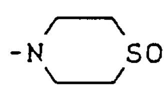 , 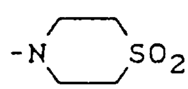 , 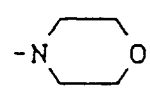 ,

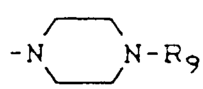 , 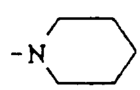 or 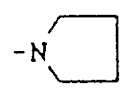

where

$R_9$ = H or optionally substituted $C_1$-$C_6$-alkyl, and wherein the heterocyclic rings mentioned can optionally contain substituents.

5. Dyestuffs of Claim 4 of the formulae

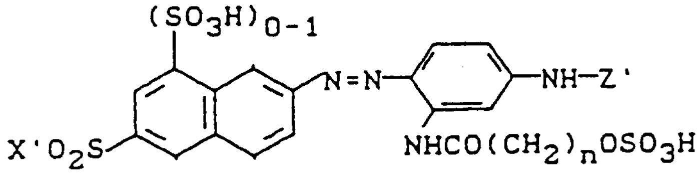

(12)

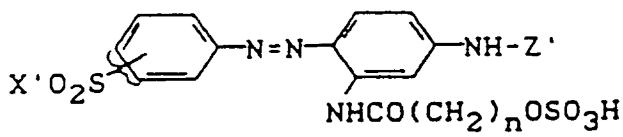

(13)

wherein X' = $CH=CH_2$ or $CH_2CH_2OSO_3H$,

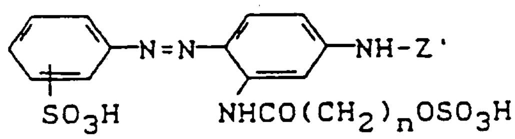

(14)

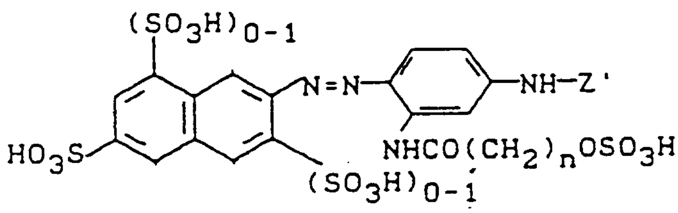

(15)

6. Use of the dyestuffs of Claims 1 to 5 for dyeing and printing materials containing hydroxyl groups and amide groups.

## Revendications

1. Colorants azoïques de formule

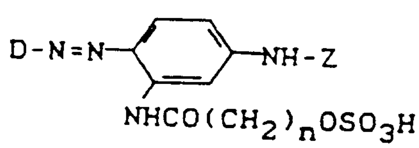

(1)

dans laquelle

D = radical d'un composant diazotable appartenant de préférence à la série benzénique, naphtalénique ou hétéroarylique,

n = 1 ou 2,

Z = H, radical acyle non réactif avec les fibres, radical réactif avec les fibres ou radical de formule

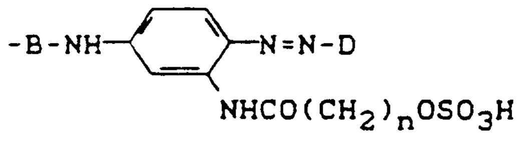

dans laquelle B représente un pont.

**2.** Colorants de la revendication 1, pour lesquels
D =

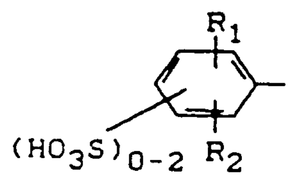

(2)

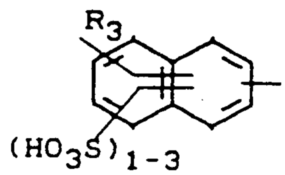

(3)

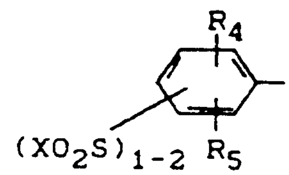

(4)

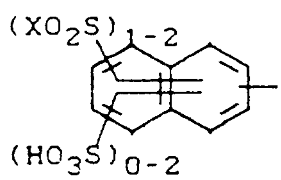

(5)

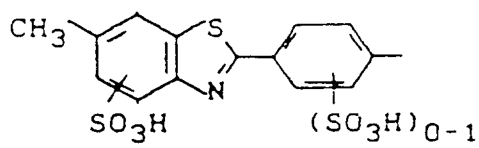

(6)

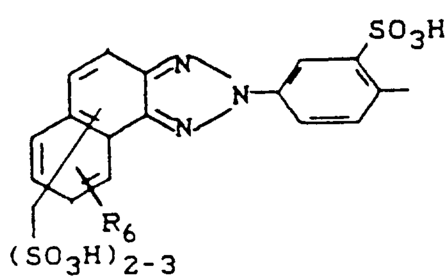

(7)

avec

$R_1$ = H, Cl, Br, F, alkyle en $C_1$-$C_4$ éventuellement substitué, alcoxy en $C_1$-$C_4$, carbalcoxy, sulfonamide, sulfophénylazo ou sulfonaphtylazo ; carboxy ou -NHZ,
$R_2$ = H, Cl, Br, F, alkyle en $C_1$-$C_4$ éventuellement substitué ou alcoxy en $C_1$-$C_4$,
$R_3$ = H, Cl, OH, carboxy, alcoxy en $C_1$-$C_4$ éventuellement substitué, sulfophénylazo ou sulfonaphtylazo,
$R_4$ = H, alkyle en $C_1$-$C_4$ éventuellement substitué ou alcoxy en $C_1$-$C_4$, F, Cl, Br, COOH, $SO_3H$,
$R_5$ = H, alkyle en $C_1$-$C_4$ éventuellement substitué ou alcoxy en $C_1$-$C_4$, F, Cl ou Br,
$R_6$ = H ou -NHZ,
X = $-CH=CH_2$ ou $-CH_2CH_2Y$ avec

Y = substituant éliminable par les alcalis.

**3.** Colorants des revendications 1 et 2, pour lesquels
Z = radical réactif avec les fibres, de la série pyrimidinylique ou triazinylique.

**4.** Colorants de la revendication 1, de formule

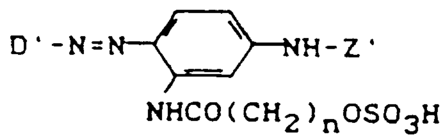

(1a)

avec n = 1 ou 2
D' =

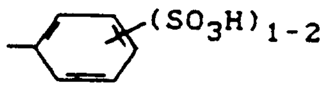

(8) ,

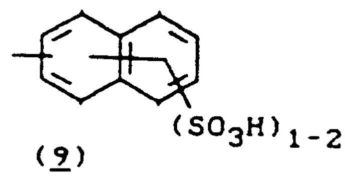

(9) ,

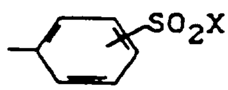

(10) ,

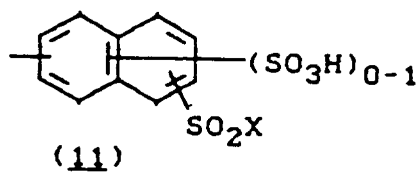

(11)

et
Z' =

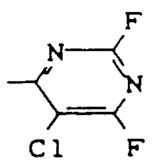 , 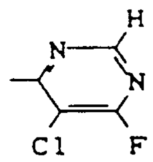 , 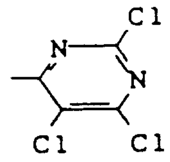 ,

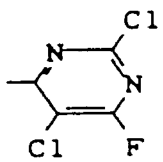 , 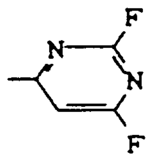 , 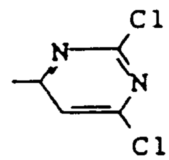 ,

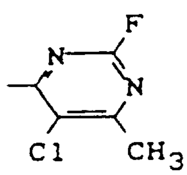 , 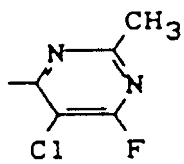 , 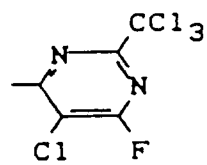 ,

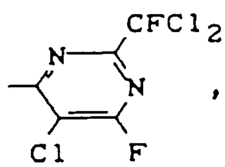 , 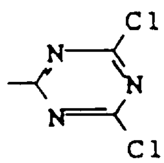 , 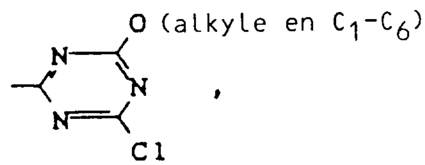 ,

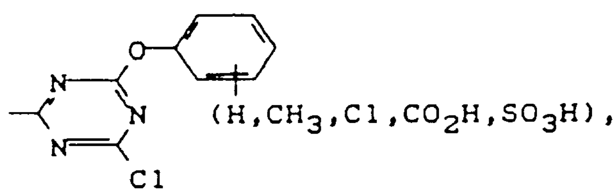 , 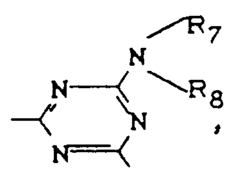 ,

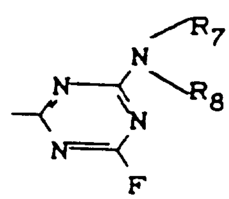 ou 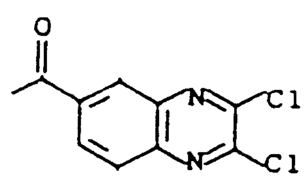

avec

$R_7$, $R_8$ = H, alkyle en $C_1$-$C_6$ éventuellement substitué, cycloalkyle, phényle éventuellement substitué, naphtyle et hétéroaryle ou bien

$NR_7R_8$ =

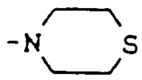 , 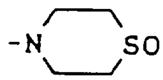 , 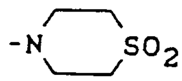 , 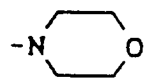 , 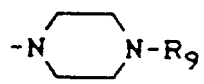 ,

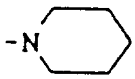 ou 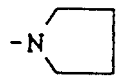

avec $R_9$ = H, alkyle en $C_1$-$C_6$ éventuellement substitué,
les noyaux hétérocycliques mentionnés pouvant éventuellement porter des substituants.

**5.** Colorants de la revendication 4, de formules

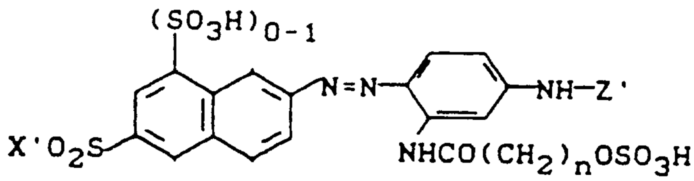 (12)

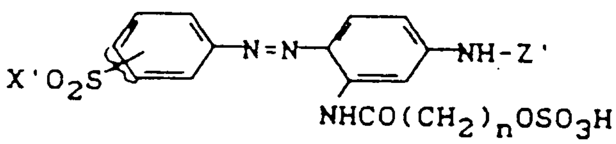 (13)

avec X' = $CH=CH_2$ ou $CH_2CH_2OSO_3H$,

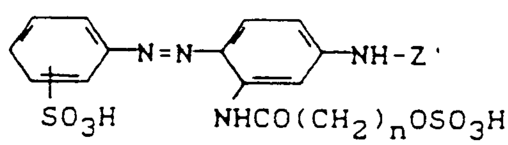 (14)

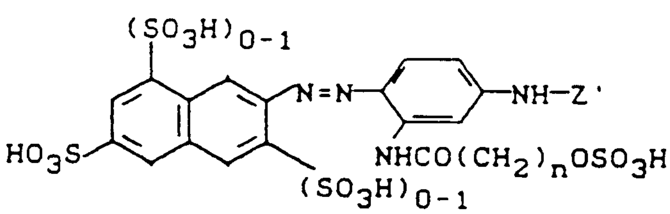 (15)

**6.** Utilisation des colorants des revendications 1 à 5 pour la teinture et l'impression de matières contenant des groupes hydroxy et des groupes amide.